(19) Europäisches Patentamt
European Patent Office
Office européen des brevets

(11) EP 1 145 558 B1

(12) # EUROPEAN PATENT SPECIFICATION

(45) Date of publication and mention of the grant of the patent:
**02.01.2004 Bulletin 2004/01**

(21) Application number: **99919988.8**

(22) Date of filing: **23.04.1999**

(51) Int Cl.$^7$: **H04N 7/24**

(86) International application number:
**PCT/US1999/008886**

(87) International publication number:
**WO 1999/056471 (04.11.1999 Gazette 1999/44)**

(54) **SYSTEM FOR EDITING COMPRESSED IMAGE SEQUENCES**

SYSTEM ZUM EDITIEREN KOMPRIMIERTER BILDSEQUENZEN

SYSTEME DE MISE EN FORME DE SEQUENCES D'IMAGES COMPRIMEES

(84) Designated Contracting States:
**DE FR GB**

(30) Priority: **29.04.1998 US 69596**

(43) Date of publication of application:
**17.10.2001 Bulletin 2001/42**

(73) Proprietor: **Hewlett-Packard Company, A Delaware Corporation**
**Palo Alto, CA 94304 (US)**

(72) Inventors:
- **WEE, Susie, J.**
  **Mountain View, CA 94043 (US)**
- **VASUDEV, Bhaskaran**
  **Mountain View, CA 94043 (US)**

(74) Representative: **Schoppe, Fritz, Dipl.-Ing.**
**Schoppe, Zimmermann, Stöckeler & Zinkler**
**Patentanwälte**
**Postfach 246**
**82043 Pullach bei München (DE)**

(56) References cited:
**EP-A- 0 656 729**

- **WEE ET AL: "Splicing MPEG Video Streams in the Compressed Domain" IEEE WORKSHOP ON MULTIMEDIA SIGNAL PROCESSING. PROCEEDINGS OF SIGNAL PROCESSING SOCIETY WORKSHOP ON MULTIMEDIA SIGNAL PROCESSING, 23 June 1997 (1997-06-23), pages 225-230, XP002081482**
- **S WEE, B VASUDEV: "Splicing MPEG video streams in the compressed domain" HEWLETT-PACKARD COMPANY,1997, XP002119777 cited in the application**
- **MCGRATH E: "DIGITAL INSERTION OF ADVERTISING INTO A DIGITAL STREAM (DID)" INTERNATIONAL BROADCASTING CONVENTION, September 1997 (1997-09), pages 258-261, XP000668975**

Remarks:
WIPO A3 publication data is not currently available.

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 1 145 558 B1

## Description

The present invention relates to compression of image sequences and, in particular, provides an editor which can re-order, splice or otherwise manipulate one or more image sequences without having to completely decompress every frame of those image sequences.

## BACKGROUND

As with many of today's technologies, the current trend in image sequence developing and editing is to use digital formats. Even with motion picture film, editing of image sequences (including image splicing, color processing, and special effects) can be much more precisely accomplished by first converting images to a digital format, and performing desired edits upon the digital format. If desired, images can then be converted back to the original format.

Unfortunately, digital formats usually require enormous amounts of memory and transmission bandwidth. A single image with a resolution of 200x300 pixels can occupy megabytes of memory. When it is considered that many applications (for example, motion picture film processing) require far greater resolution, and that image sequences can include hundreds or thousands of images, it becomes very apparent that many applications are called upon to handle gigabytes of information, creating a bandwidth problem, in terms of computational and transmission resources.

To solve the bandwidth problem, standards have been proposed for image compression. These standards generally rely upon spatial or temporal redundancies which exist in one or more images.

A single image, for example, may have spatial redundancies in the form of regions having the same color (intensity and hue); a single, all blue image could potentially be represented simply by its intensity and hue, and information indicating that the entire frame has the same characteristics.

Temporal redundancies typically exist in sequences of images, and compression usually exploits these redundancies as well. For example, adjacent images in a sequence can be very much alike; exploiting redundancies, a compressed image sequence may include data on how to reconstruct current image frames based upon previously decoded frames. This data can be expressed as a series of vectors and difference information. To obtain this information, pixels in the second frame are grouped into images squares of 8x8 or 16x16 pixels ("blocks" of pixels), and a search is made in a similar location in a prior frame for the closest match. The vectors and difference information direct a decoder to reconstruct each image block of the second frame by going back to the first frame, taking a close match of data (identified by the vector) and making some adjustments (identified by the difference information), to completely reconstruct the second frame.

One group of standards currently popular for compression of image sequences has been defined by the Moving Picture Experts' Group, and these standards are generally referred to as "MPEG." The MPEG standards generally call for compression of individual images into three different types of compressed image frames: compressed independent ("I") frames exploit only spatial redundancies, and contain all the information necessary to reconstruct a single frame; compressed prediction ("P") frames exploit temporal redundancies from a prior frame (either a prior P or I frame) and typically only require only about 1/3 as much data as an I frame for complete frame reconstruction; and, compressed bidirectional ("B") frames can use data from either or both of prior and future frames (P or I frames) to provide frame reconstruction, and may only require 1/4 as much data as a P frame. Other compression standards also rely upon exploitation of temporal image redundancies, for example, H.261 and H.263.

While very useful in reducing the amount of data necessary to completely reconstruct an image sequence, image compression techniques are typically not compatible with editors which manipulate image sequences. For example, it may be desired to play a compressed image sequence in reverse; because a compressed image sequence typically includes prediction frames, which are predicted based on previously decoded frames, playing such a sequence backward is extremely difficult unless the entire sequence is first decoded, and then reordered to a last-to-first format. If it is desired to cut and splice an image sequence, then it may not be possible to place a cut beginning with one image frame without prior decoding of many prior frames, because if the frame in question is encoded as (in MPEG compression) a P or B frame, information from one or more prior, cut frames may be needed in order to splice or reorder desired image frames. Typically, images in a MPEG sequence are formed into a group of picture ("GOP") which do not depend upon other frames, with all images in the GOP being completely decoded prior to any mixing of frames. For these reasons, editors typically operate in the image domain only, upon fully decompressed image sequences.

Conventional editing of compressed digital image sequences is illustrated in FIG. 1, in which a "head portion" 11 of a first compressed image sequence 13 is to be combined with a "tail portion" 15 of a second compressed image sequence 17, to form a composite image sequence 19. The composite image sequence may also be compressed, as indicated by reference numeral 21 in FIG. 1. Compressed frames representing the head portion 11, that is, a group of compressed frames from the first image sequence that will be retained, is seen in bold underlined text in coded order, as is a group of compressed frames representing the tail portion 15 of the second image sequence. Each sequence 13 and 17 is compressed using a MPEG standard, such as each of ten frames of the first image sequence, and ten

frames of the second image sequence, are normally each maintained as an I, P or B frame; the image sequences can be stored in memory or CD-ROM, or transmitted via cable, the internet or modem, or made available in some other fashion.

To combine the head and tail portions 11 and 15, it is first conventionally necessary to decode compressed images, i.e., reconstitute each entire visual frame 23, as indicated by conversion arrows 25 and 27 and by decoders 28. As graphically indicated in FIG. 1, a first shaded group 29 of five frames (the end of the head portion) is to be retained from the first image sequence and a second hatched group 31 of five frames (the beginning of the tail portion) is to be retained from the second image sequence. Once completely decoded, the individual frames from the two image sequences can simply be reordered or combined in any fashion. If it is desired to have a compressed composite image, the composite image sequence 19 must typically then be re-encoded using a MPEG standard, as indicated by the reference numeral 33 of FIG. 1 and encoder 34. As is illustrated by comparing the three encoded sequences 13, 17 and 21, the encoded frames (I,P,B) for the composite image may be quite different from each the encoded frames for the first and second sequences.

Unfortunately, manipulation of individual images of a sequence heavily taxes computational resources when images must first be decompressed. For example, a typical editing application as just described can require over 20,000 MOPS ("million operations per second"), which necessitates enormous memory and computational resources. Further, data transmission rates are typically twenty million bits per second (20mbps) for compressed image sequences, and one billion bits per second (lbbps) for uncompressed image sequences. As can be seen, therefore, image editing as described cannot practically be implemented for use in either real-time applications, or upon a typical personal computer as, for example, in many video or internet applications.

A definite need exists for a system which permits manipulation of individual images, including reverse-play and image splicing, and which does not require compressed image sequences to be completely decoded. Ideally, such a system would have the capability to splice image sequences or otherwise manipulate images, entirely within the compressed domain (or at least without decoding entire GOPs). A need further exists for an inexpensive system, which can be implemented in software for use upon readily available image processing equipment and, more generally, upon readily available computing devices. Finally, a need exists for a real-time editor for compressed image sequences. The present invention satisfies these needs and provides further, related advantages.

Wee, et al describes in "Splicing MPEG Video Streams in the Compressed Domain", IEEE Workshop on Multimedia Signal Processing, Proceedings of Signal Processing Society Workshop on Multimedia Signal Processing, 23 June 1997, pages 225-230 an algorithm for efficiently splicing two MPEG-coded video streams. A copy of this article is attached to this specification as Appendix A.

It is the object of the present invention to provide a system which permits manipulation of individual images, including reverse play, and which does not require compressed image sequences to be completely decoded.

This object is achieved by a method according to claim 1, and by an apparatus according to claims 7 and 9.

The present invention provides an editor that can manipulate a compressed image sequence without having to first completely decompress all of the images of the sequence. As such, the present invention provides a fast mechanism that can be easily implemented in most computing devices and image processing equipment. As one example, live camera feeds such as from one football game transmitted by satellite can be spliced with other compressed images, representing a commercial. An editor according to the present invention requires significantly less operations to perform editing upon compressed images, and therefore should present ready application to home computer use and real-time editing applications.

One form of the invention provides an apparatus for editing a sequence of images by manipulating the temporal order of the image sequence; "manipulating" and "editing" a "temporal order" are used herein to refer to manipulating the play order of at least one image frame relative to other frames including (but not limited to) splicing, where two image sequences are combined to recreate a third image sequence, reverse-play, where an image sequence is played in reverse order, and similar functions. In accordance with this form of the invention, the editor is used to select a temporal location within the sequence where images are to be cut or reordered. The editor removes a temporal dependency, such as a prediction upon prior or future frames, as appropriate. Removal of a temporal dependency is accomplished without converting the entire sequence to a set of ready-to-display ("image domain") images. For example, in accordance with the invention, the editor can cut and splice two sequences together by decoding to the image domain only a small number of tail frames and only a small number of head frames, and then reconverting them to an appropriate compressed image format ("compressed domain"). In the preferred embodiment, removal of temporal dependencies is performed entirely in the compressed domain, by operating on motion vector and discrete cosine transform ("DCT") information. In another embodiment, removal of temporal dependencies is achieved by decoding only select frames into the spatial domain.

A second form of the invention provides a method which corresponds to the processes performed by the editor described above, while a third form of the invention provides instructions stored on machine-readable media.

The invention may be better understood by referring to the following detailed description, which should be

read in conjunction with the accompanying drawings. The detailed description of a particular preferred embodiment, set out below to enable one to build and use one particular implementation of the invention, is not intended to limit the enumerated claims, but to serve as a particular example thereof.

## BRIEF DESCRIPTION OF THE DRAWINGS

FIG. 1 is an illustrative diagram of one prior art editing scheme where two image sequences are to be cut and spliced together. As seen in FIG. 1, compressed images must typically first be completely converted to the image domain for editing, and then be converted back to the compressed domain.

FIG. 2 is an illustrative diagram similar to FIG. 1, but which shows processing performed in accordance with the present invention. In particular, splicing of two image sequences together is performed by converting a limited number of frames to alter their temporal dependencies in a manner consistent with splicing.

FIG. 3 is an illustrative diagram showing an application for the editor of FIG. 2, namely, in a real-time system for cutting and splicing together two satellite feeds, and forming a composite feed for retransmission to a satellite, such as might be performed by a television network.

FIG. 4 is a software block diagram illustrating a typical editing application using the preferred embodiment, namely, cutting and splicing together of two moving picture sequences to form a third, composite moving picture sequence.

FIG. 5 is a software block diagram indicating a typical editing application using the preferred embodiment, namely, processing a moving picture sequence in the compressed domain to provide reverse-play.

FIG. 6 is a software block diagram indicating actions in converting a P frame to an I frame.

FIG. 7 is a software block diagram indicating actions in converting a B frame to a B' frame having only forward or backward dependencies, but not both.

FIG. 8 is a software block diagram indicating actions in converting an I frame to a P frame.

FIG. 9 is a block diagram illustrating systems layout of an editor from FIG. 3.

FIG. 10 is a block diagram illustrating a transcoding process, which revises DCT coefficients for a current frame to eliminate dependencies upon a reference frame.

## DETAILED DESCRIPTION

The invention summarized above and defined by the enumerated claims may be better understood by referring to the following detailed description, which should be read in conjunction with the accompanying drawings. This detailed description of a particular preferred embodiment, set out below to enable one to build and use one particular implementation of the invention, is not intended to limit the enumerated claims, but to serve as a particular example thereof. The particular example set out below is the preferred specific implementation of an editor for manipulating image order and providing a compressed output. The invention, however, may also be applied to other types of systems as well.

### I. INTRODUCTION TO THE PRINCIPAL PARTS.

The preferred embodiment is a system that permits editing of image sequences in the compressed domain, that is, without requiring full decoding of compressed images. The present invention should therefore allow for image sequence processing using a relatively small amount of processing or transmission resources; for example, an editor embodying principles of the present invention may provide for real-time image processing where two images are spliced together using a personal computer running appropriate software, such as in video teleconferencing applications. Alternatively, the present invention may find application in a network editing system, where a commercial is to be mixed with a feed from a live sporting event.

FIG. 2 illustrates operation of the preferred embodiment in a splicing application, similar to the splicing application discussed above in connection with FIG. 1. As seen in FIG. 2, part of a first set 101 of images, ending with a

head image 103, is to be spliced to part of a second set 105 of images, beginning with a tail image 107. Each of the first and second sets of images is stored in a compressed format, as indicated by a first set 111 of MPEG frames and a second set 113 of MPEG frames, with frames to be retained indicated in FIG. 2 by bold, underlined, italicized text. Each set of frames is fed in compressed format to an editor 115 which embodies principles of the present invention. Incoming compressed frames are subjected to frame conversion, as indicated by two reference blocks 117 and 119. The purpose of the frame conversion blocks is to modify dependencies of one or more particular frames upon other frames, so that the particular frames can be reordered or otherwise combined with different images or image sequences. The conversion can be performed simply by converting a limited number of frames (but not an entire GOP) to the image domain, as represented by two shaded frames 120, and then reconverting those shaded frames to the compressed domain. However, as described further below, conversion is preferably performed, not by converting to the image domain at all, but instead, by operations performed entirely within the compressed domain. For example, the two reference blocks 117 and 119 in the preferred embodiment indicate that each set of frames is converted (without performing an inverse discrete cosine transform "IDCT") to a compressed data subset 121 and 123, representing only those frames that are to be retained. These subsets are then combined, as indicated by a summing junction 125, and rate control is then applied to prevent data underflow or overflow, as indicated by reference block 127. The editor's finished product is then provided in a fully MPEG compliant compressed image output sequence 129, whereby editing has been accomplished to produce a composite image sequence 131, without fully decoding each of the two image sequences 103 and 105 to the image domain.

Referring to FIG. 1, discussed in the Background section above, a real-time splicing operation requiring full image sequence decoding and re-encoding can require as much as 20,000 MOPS ("millions of operations per second"); by instead performing splicing in the compressed domain as seen in FIG. 2, it is expected that the present invention can perform splicing at the rate of one splice per second using less than 2,000 MOPS. Preferably, the present invention is implemented as software run on a computer or special purpose editor (hereafter, both referred to as "computing devices").

As mentioned, "editing" or "manipulating" a "temporal order" refers to manipulation of images with respect to order in which they appear within their sequence and includes, for example, splicing images from one sequence with images from a different sequence, reordering compressed images to reverse a sequence to a reverse-play mode, dropping select images from a sequence, and playing a sequence in a fast-forward mode, etcetera. Also, the preferred application for the present invention is to MPEG format images; however, it should be understood that the present invention can be applied to other compressed image sequence formats as well, such as motion-JPEG, H.261, and H. 263, as well as to prediction based compression schemes which do not employ a discrete cosine transform ("DCT") or a discrete sine transform ("DST"); for example, the present invention can be applied to schemes which use wavelet or sub-band transforms.

FIG. 3 illustrates a typical application 151 for an editor 153 which implements principles of the present invention, namely, a real-time application which involves mixing compressed signals from two satellite feeds. FIG. 3 illustrates two satellites 155 and 157 which transmit two different compressed image signals, for example, two different football games. The transmissions, represented by reference numerals 159 and 161, are received by one or more receivers 163 and fed to corresponding input buffers 165 and 167. Alternatively, the two inputs to the system could be outputs from two digital television cameras, i.e., cameras which output digitally compressed image sequences. Without leaving the compressed domain, or performing an IDCT, the preferred editor 153 operates under the control of a user interface 169, to mix the two compressed images signals as desired. Preferably, the system includes (in parallel with the editor and associated buffers 168) one or more MPEG decoders 170 which are used to display images using the user interface. For example, the user interface can include one or more monitors 171 and a keyboard 173, and can concurrently display several image windows such as one corresponding to each transmission 159 and 161, as well as to an output 175 of the editor. With the user interface, a person controlling the editor 153 can cause the editor to switch the output between several image signals, such as between the two football games, or to mix commercials with a live satellite transmission, etcetera.

The output 175 is fed to an output image buffer 177, and from there to a transmitter 179 for transmitting a composite satellite signal to satellite 181. The signal can then be received by a local MPEG decoder 183, for example, at a cable company receiving station, and transmitted via cable 185 to individual television subscribers, represented by the reference numeral 187.

It should be understood that the application just discussed, namely, which involves satellite feeds, is but one application for the preferred editor, which may be applied elsewhere as well, for example, in post-production houses, or as software for use upon individual personal computers for graphics or video conferencing applications.

With several principle features of the preferred embodiment thus introduced, the preferred embodiment will now be discussed in additional detail.

## II. EDITING COMPRESSED IMAGE SEOUENCES.

### A. General.

As indicated earlier, the preferred embodiment uses frame conversions as necessary to alter temporal dependencies in a manner consistent with any desired manipulation. Below, two specific manipulations will be discussed, namely, cutting and splicing together of two image sequences and conversion of an image sequence to reverse play. The invention, however, may be applied to any manipulation of images to rearrange temporal order with respect to other images (including arranging images to be ordered next to new images, such as splicing).

In one MPEG compression scheme, an I frame includes only discrete cosine transform ("DCT") coefficients for every 8x8 pixel block of an image. Transforms (such as a DCT) are performed in image compression typically to shorten length of an image sequence (e.g., the memory or transmission bandwidth required for the image). The result of a DCT is typically another 8x8 matrix, where each value represents a frequency of intensity change within the corresponding pixel block, on a row basis and on a column basis. Very high frequency values, which could represent regular and quick intensity variations in the 8x8 pixel block, are typically presumed to be less important than lower frequency values, and are found at the bottom right of the 8x8 DCT matrix; via a step known as "quantization," these values are sometimes scanned and processed to become zeros. Each 8x8 DCT matrix is then encoded using a scheme which zig-zag scans the matrix, in a regular pattern from upper left to bottom right, i.e., such that the values assumed to be less important are last, and preferably the coding for each matrix ends with a variable-length string of zeros. This variable-length string is then replaced with an escape character, and each quantized, encoded DCT matrix then becomes a variable-length string of DCT coefficients, followed by an escape character which indicates remaining entries of the DCT matrix are zeros.

P frames use motion vectors as well as DCT coefficients. More particularly, each block in a P frame is searched against an image corresponding to prior P or I frame to determine a closest match (within a position window of typically 31 pixels in any direction). The resultant motion vector, identifying the best fit, is then encoded. In addition, the pixel block of the current frame and the best fit pixel block of the prior frame are compared to produce difference values, and it is these difference values which are encoded in the DCT format, as just described in connection with the I frames. In this manner, a P frame is predicted based upon a prior I or P frame and is dependent upon decoding of the prior I or P frame for image domain reconstruction. Whether a compressed image is a I, P or B frame is determined by a field in header information for each frame, which a decoder uses to determine proper decompression procedure.

B frames can depend upon both a prior I or P frame as well as a subsequent I or P frame. Since objects in image sequences frequently change gradually over several images, the average of preceding and subsequent frames frequently provides a good estimate for a current frame, and requires the fewest encoded DCT coefficients (and the smallest amount of encoded prediction difference data for image recreation). Typically, a B frame includes motion vector representations for both the immediately prior I or P frame and the immediately subsequent I or P frame, as well as DCT coefficients for difference values from an averaged pixel block produced from these other frames.

The preferred editor modifies I, P and B frames to the extent necessary to reorder the display sequence of associated images. For example, the following compressed sequence of frames represents temporal ordering of images for one group of pictures ("GOP");

$I_1B_2B_3P_4B_5B_6P_7B_8B_9I_{10}$.

The temporal order of images, indicated by subscript numbers, would require re-ordering of the I, P and B frames in compressed format because, as mentioned, a decoder generally needs subsequent P or I frames to decode a B frame. Consequently, the transmitted (or coded) order for the sequence indicated above would be as follows;

$I_1P_4B_2B_3P_7B_5B_6I_{10}B_8B_9$.

### 1. Image Splicing.

In a first hypothetical, the image sequence

$I_1B_2B_3P_4B_5B_6P_7B_8B_9I_{10}$

is to be cut and spliced after frame 5 to frame 7 of a second image sequence, identified first in temporal order and then in transmission order as follows;

$I_AB_BP_CB_DP_EB_FP_GB_HB_II_J$,

$I_AP_CB_BP_EB_DP_GB_FI_JB_HB_I$.

That is to say, one desires to form a third image sequence with frames identified as follows;

***$I_1P_4B_2B_3$***$P_7$***$B_5$***$B_6I_{10}B_8B_9$ - $I_AP_CB_BP_EB_D$***$P_G$***$B_F$***$I_JB_HB_I$***

where frames appearing in bold, italicized, underlined font are to be kept, with the remaining frames being discarded. Conventionally, such a splice presents problems in the compressed domain, because in this hypothetical, frame $B_5$ of the first sequence may depend upon frame $P_7$, no longer present, and frame $P_G$ depends upon frames $P_E$, $P_C$ and $I_A$,

also no longer present. Consequently, the combination of frames discussed just above is typically not possible without completely decompressing each image sequence.

However, contrary to conventional wisdom, the preferred editor in this example performs processing without converting each of the two image sequences to the image domain prior to performing editing. In particular, the first image sequence is first processed by converting frame $B_5$ to remove its dependencies upon any subsequent frames, e.g., frame $P_7$. The editor, via a "transcoding" process described below, determines that for each block of frame $B_5$ that depends upon a block of frame $P_4$ (and $P_7$), it should add an estimate of ½ the DCT coefficients for the block identified by motion vectors pointing to frame $P_4$, while subtracting ½ of the DCT coefficients for the block identified by motion vectors pointing to frame $P_7$, and removes dependencies attached by frame $B_5$ to future frames. The editor, also identifying that frame $P_G$ depends upon frames $P_E$, $P_C$ and $I_A$, uses transcoding to convert each DCT block of frame $P_G$ to reform frame $P_G$ into an I frame, e.g. , $I_G$, by first converting frame $P_C$ to an independent frame, $I_C$, then converting frame $P_E$ to an independent frame, $I_E$. Represented in transmission order, each of the first and second sequences of images then appears as follows;

***$I_1P_4B_2B_3$***$P_7$***$B'_5$***$B_6I_{10}B_8B_9$, and

$I_AP_CB_BP_EB_D$***$I_G$***$B_F$***$I_JB_HB_I$***.

Given the two sequences identified above, frames that are not to be included in the spliced image can simply be discarded, with simple ordering of the remaining compressed frames resulting in the following, MPEG-compliant sequence;

$I_1P_4B_2B_3$ - $I_G$ - $B'_5$ - $I_JB_HB_I$.

Cutting and splicing together two image sequences is further illustrated with respect to FIGS. 2. and 4. Returning to FIG. 2, it is noticed that the first set 111 of MPEG frames identifies five frames which are to be retained, namely, the italicized, underlined sequence "...IPBB and B" [the fifth P frame is actually the sixth frame in play-order]. The editor identifies that the frames which are to be retained do not have motion vectors which point to frames which are to be cut (as would be the case, for example, if the ending frame were a B frame). Accordingly, the editor may simply use the sequence "...IPBB B" without any frame conversions. On the other hand, the second set 113 of MPEG frames identifies that frames "PBBPI..." are to be retained. The editor, in as part of its initial processing steps, identifies that the first three frames, namely a P frame and two B frames, depend upon frames which will be cut and that frame conversions are necessary if the desired manipulation is to be performed. First, the P frame depends upon a prior P frame which, in turn, depends upon a prior I frame. Second, the B frames depend upon both the first, retained P frame and the prior P frame, which in turn depends upon the preceding P and I frames. These dependencies are shown by the following description, where the frames are seen in transmission order and frames to be retained are showed in bold, italicized text:

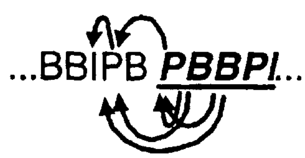


As identified in FIG. 2 by reference numeral 123, a frame conversion block first converts the P frame to an I frame, and then converts the B frame to remove all dependencies upon prior frames (i.e., the new frame being designated B' or "B-forward").

The cutting and splicing together of two image sequences is better illustrated by FIG. 4. It will be assumed that these image sequences have been de-quantized and expanded to motion vector- ("MV-") and discrete cosine transform- ("DCT-") based representations. First, the editor proceeds to form a head data stream by identifying any cut points in a first sequence of frames, as identified by a processing block 201 of FIG. 4. If any frames have forward-looking dependencies, i.e., they are B frames that have pointers to P or I frames that will be cut, the editor proceeds to convert such ending B frames to B-backward frames, such that no temporal dependencies will be affected by the desired cut. This operation is represented by the reference numeral 203 in FIG. 4.

The editor also proceeds to form a tail data stream by a similar process, as represented by processing blocks 205 and 207 of FIG.4. In this case, however, lead frames which have backward temporal dependencies must be converted to remove those dependencies. Accordingly, if the lead frames include a P frame which points to frames which are to be cut, that P frame is converted to an I frame. Similarly, if lead frames include B frames, those frames are processed to become B-forward frames (B frames having no backward dependencies). In this regard, while FIG. 2 shows frames in transmission order, cutting and splicing according to the present invention can be equivalently performed by cutting either play order or transmission order.

Once the head data stream and tail data streams have been prepared, they are ordered with respect to one

another (as indicated by the reference numeral 209) to produce a composite sequence, and rates are matched to prevent data underflow or overflow. If buffer rates are very different for the original and spliced segments, then another frame conversion can be performed upon the composite sequence to match bit rates, as indicated by blocks 211, 213 and 215 of FIG. 4. Normally, however, it is expected that bit rates can be suitably adjusted by several different methods, including by rate-adjusting transition frames, as represented by blocks 217 and 219 of FIG. 4. This rate-adjusting simply reduces or increases the amount of data in the DCT representations for a transition frame to match original parameters, for example, by re-quantizing DCT coefficients, adding zeros ("bit-stuffing") or by reducing the amount of high frequency data in a transition frame according to known methods. One such method, for example, is discussed in U.S. Patent No. 5,534,944 to Egawa et al.

## 2. Reverse Play.

In a second hypothetical case, it is to be assumed that one desires to play the sequence of images 1-10 in reverse order. In that case, the sequence play order would be as follows;

$I_{10}B_9B_8P_7B_6B_5P_4B_3B_2I_1$.

However, such reverse play conventionally creates problems, because the frame $P_7$ is dependent upon frames $P_4$ and $I_1$, not frame $I_{10}$, and because frame $P_4$ is dependent upon frame $I_1$, not frames $P_7$ or $I_{10}$. As a result, the image sequence (1) above must typically be completely decoded, with individual images then reordered in the image domain, and then the reversed sequence must be re-compressed.

The preferred editor in this second hypothetical case processes compressed frames by converting P frames to I frames as necessary. The editor processes frame $P_4$ to (a) combine its DCT coefficients with those of frame $I_1$, in a manner described below, and (b) uses the motion vectors for frame $P_4$ in performing this combination, so that motion vectors are no longer necessary; the result is a new compressed frame, $I_4$. Similarly, frame $P_7$ is processed to create new compressed frame $I_7$. The editor processes B frames in the compressed domain to then alter its motion vectors, i.e., forward vectors become backward vectors and backward vectors become forward vectors, without altering DCT coefficients for the B frames at all. The compressed, reverse-play sequence would appear in temporal order as follows;

$I_{10}B_9B_8I_7B_6B_5I_4B_3B_2I_1$,

and would appear to be suitable for storage or transmission in the following order;

$I_{10}I_7B_9B_8I_4B_6B_5I_1B_3B_2$.

Additional processing can further be performed to compress this sequence. In particular, frame $I_7$ following reorder may be converted back to a P frame, this time dependent upon frame $I_{10}$, and frame $I_4$ can be converted to a P frame dependent both upon frame numbers 10 and 7, for example.

Converting a sequence to reverse-play order is indicated in block diagram by FIG. 5. In particular, a sequence of interest 225 is first processed to convert all P frames to I frames, as indicated by function block 227 and a compressed frame data set 235, seen at the right of FIG. 5. In this example, frames are illustrated in play sequence, and are numbered from 0 to 9 to indicate original play order. Second, B frames are processed to switch their pointers to their two anchor frames (i.e., forward motion vectors become backward motion vectors, and vice-versa), as indicated by function block 229 and compressed frame data set 237. Third, the frames are reordered in the desired play sequence, as indicated by box 231 and a compressed frame data set 239. As illustrated by the compressed frame data set 239, the frames have now been reordered, such that the frame that was originally last (frame 9) comes first, and so on. Finally, bit rates are examined for the new sequence with additional rate change performed as necessary to maintain rate parameters, as indicated by function block 233. If desired, quantization and rate matching can be performed prior to frame reordering, as indicated by function block 234 of FIG. 5.

Hardware and instructions for implementing these functions typically include a computer (which may be embedded in special purpose editing equipment) and associated buffers, together with a memory for multiple frames or a coded bit stream (e.g., a compressed multiple frames) for temporary use in reordering frames with respect to the same or new data sequences, an input mechanism and an output mechanism (such as a CDROM, satellite feed, memory feed, or other system), and special purpose software which can be loaded onto the computer or provided by a manufacturer of a special purpose editor.

## 3. Alternative Embodiment; Conversion of Key Frames To The Image domain.

As indicated earlier, image reordering can also be performed in a manner that does not violate temporal dependencies by identifying key frames, converting those frames to the image domain and, then, reprocessing those images in any desired manner. For example FIG. 2 identified a splicing application where the sequence "...BBIPBPBBPI..." is to be cut, and the latter five frames to be appended to another image sequence. If the frames "PBBPI" were simply cut, in this hypothetical, the first three frames could no longer be accurately decoded because they would all depend upon a prior, missing I or P frame. While the preferred embodiment calls for frequency domain conversion of

these frames to remove such dependencies, it would also be possible to entirely decompress as little as four entire frames only, and then perform three re-conversions to achieve the desired splicing. For example, prior to any cut, the frames "PBB..." could be decoded to the image domain, and then recoded as "IPB..." frames, for example. Similarly, implementation of reverse-play could be effected by inverting B frame dependencies, converting P frames to the image domain, reordering these frames, and then reconverting these frames as P frames based upon the new temporal order of frames. All of these variations are viewed as within the spirit of the present invention.

### B. Specific Frame Conversions.

#### 1. P to I Frame Conversion.

Conversion of a P frame 241 to an I frame 243 is indicated in block diagram form by FIG. 6. A group of actions, found within a dashed line 245, are preferably implemented as a subroutine for severing temporal dependency between a current frame and a reference frame; in this regard, a reference frame identified by the current frame is first located, and a determination is made whether the reference frame is an I frame (all as indicated by process block 247 and decision block 249). For example, if a frame P7 which is to be transcoded is discovered to depend on frame P4 which in turn depends on frame I1, a nested transcoding subroutine is then called using frame P4 as the current frame and frame I1 as the reference frame, to convert frame P4 to independent frame I4. This process, indicated by a function block 251 of FIG. 6, is performed in as many nested loops as necessary to yield an I frame as reference frame for use with the P frame 241. In the hypothetical involving frames P7, P4 and I1, a dominant subroutine of the editor uses frame P7 as the current frame and frame I4 as the anchor frame, to yield frame I7.

The subroutine 245 processes each current P frame and a reference I frame by first loading these frames into associated buffers, and by processing each DCT block within the P frame to remove its dependency upon the reference frame, as indicated by function blocks 253 and 255 of FIG. 6. Removal of dependency upon a reference frame, referred to herein as "transcoding," is explained in greater detail below with reference to FIGS. 9 and 10. Once a macroblock has been processed to not refer to other frames, a header associated with the block is processed by removing a bit indicating presence of a motion vector, as indicated by block 257 of FIG. 6. If all DCT blocks of the current frame have been processed (or at other times if desired), the frame header is processed to reflect new status of the frame as an I frame, and the subroutine is terminated, as indicated by decision block 259 and function block 261; if not, the subroutine selects a next DCT block of the P frame 241 for processing in a like manner, until all blocks are processed, as indicated by function block 263.

#### 2. B to B' Frame Conversion.

Conversion of a B frame to a B' frame is illustrated using FIG. 7, and the conversion employs a subroutine 271 which in implementation is similar to that described above in connection with FIG. 6. In particular, a B frame 273 is processed by the editor to determine a direction of temporal dependency that is to be severed, as indicated by reference numeral 275; this direction will depend upon the desired frame manipulation. In some cases, a dependency upon future frames is to be severed, and the B frame is converted essentially to a B' frame (e.g., for a B frame having only one direction of temporal dependency). In other cases, a dependency upon past frames is to be cut, in the same manner. Finally, depending upon the desired manipulation, it may be desired to segregate one B frame only, in which case the subroutine 271 will be called twice, first to in effect convert the B frame to a B' frame, and second, to convert the B' frame to an I frame. As can be seen from FIG. 7, the subroutine is relatively straight forward, and employs blocks 277-289 and 293 which are identical to functions (247-259 and 263) described above in connection with FIG. 6; unlike the P frame to I frame conversion, however, it is not necessary to convert all referenced frames to an I frame format, since a B frame may depend upon either a P frame or an I frame. As with the P to I frame conversion, a function block 291 is performed to update frame header information, and the product of the subroutine 271 is a B' frame 295 which has at most only one direction of temporal dependency.

#### 3. I to P Frame Conversion.

A conversion from an I frame to a P frame may be performed either in completing a reverse-play sequence or in performing rate matching, the latter of which will be further described below. In the preferred embodiment, it is expected that performing further quantization upon an I frame should be sufficient to match buffer rates (and thereby prevent buffer underflow or buffer overflow), and that frame conversion should not be necessary for rate matching. Nevertheless, frame conversion may also optionally be used to assist with rate matching.

Converting an I frame to a P frame in the DCT domain is rendered difficult because it is difficult to search for a best fit for a particular DCT block when a prior reference frame is already encoded in discrete 8 X 8 DCT blocks. The

preferred embodiment avoids this difficulty by directly matching DCT coefficients for a current block against an entire, discrete block for a reference frame. While such might not represent the best fit with a prior image, per se, it is expected that this procedure should provide for a sufficiently close fit to reduce data rates to an acceptable amount. If additional computational power is available, other methods may also be used to calculate a highly accurate motion vector.

As seen in FIG. 8, an I frame 301 is processed using a second subroutine 303 to yield a P frame 305. First, a suitable anchor frame is selected from among available I frames, as indicated by function block 307. A problem similar to a recursive problem identified (in connection with the I to P and B to B' conversions), above, exists in some instances, but is handled outside of the functions illustrated in FIG. 8. For example, in a reverse play sequence, where perhaps a series of I frames are reordered and then converted to P frames, the recursion problem is addressed simply by processing the P frame first which is temporally last (as indicated by function block 302), i.e., such that the reference frame will always be selected to be an I frame.

The editor places the I frame to be converted into a first buffer and the reference I frame into a second buffer (per the processing block identified by reference numeral 309), and performs processing, block-by-block in the current frame, to identify a close match with a DCT block in the reference frame. If the resulting DCT energy is less than the original DCT energy for the block, a motion vector is defined and its presence identified in a block's associated header information, and residual DCT coefficients determined by subtracting DCT coefficients from the current block from the reference block. This processing is performed until all blocks have been processed, whereupon frame header information is updated, as identified by block 301, to reflect new status of the frame as P frame 305. The block-by-block processes just described are identified by numerals 313-319 in FIG. 8.

## 4. Transcoding.

Motion compensation of compressed video by exploiting temporal redundancies implies predicting each 8 X 8 spatial domain block *x* of the current picture by a corresponding reference block *x*' from a previous or future picture and encoding the resulting prediction error block $e = x - x'$ by using a DCT algorithm. In some of the pictures (*e.g.* B-pictures), blocks can be estimated from either past or future reference blocks, or both of them. See, *Coding of Moving and Associated Audio. Committee Draft of Standard ISO11172*, ISO/MPEG 90/176, December 1990; *Video Codec for Audio Visual Services at px64 Kbits/s*, CCITT Recommendation H.261, 1990; and D. le Gall, *MPEG: A Video Compression Standard for Multimedia Applications*, Commun. of the ACM, Vol. 34, No. 4, pp. 47-58, April 1991. For the sake of simplicity, the discussion below shall assume that only the past is used (e.g., P-pictures), and the extension is straightforward.

The best matching reference block x' may not be aligned to the 8 X 8 block of the current picture. In general, the reference block will intersect with at most four neighboring spatial domain blocks, which are henceforth denoted $x_1$, $x_2$, $x_3$, and $x_4$, that together form a 16 x 16 square, where $x_1$ corresponds to northwest, $x_2$ to northeast, $x_3$ to southwest, and $x_4$ to southeast. The capitalized, italicized designation *X* will be used to refer to the DCT representation of these blocks. The various blocks, $x$, $x'$, $x_1$, $x_2$, $x_3$, and $x_4$ are also respectively illustrated in FIG. 10 by the reference numerals 325, 327, 329, 331, 333 and 335, and are separated from a block diagram describing associated process steps by a dashed line 337.

The goal of transcoding is to compute a new DCT $X''$ of the current block from the given DCT X, and the DCT's $X_1, ..., X_4$. Because DCT's may be combined simply by adding their coefficients, $X'' = X' + X$, the main problem that remains is that of calculating $X'$ directly from $X_1, ..., X_4$.

The intersection of the reference block $x'$ with $x_1$ form an h X w rectangle (*i.e.* having h rows and w columns), where $1 \leq h \leq 8$ and $1 \leq w \leq 8$. This fact implies that the intersections of $x'$ with $x_2$, $x_3$, and $x_4$ are rectangles of sizes $h$ X ($8$-$w$), ($8$-$h$) X $w$, and ($8$-$h$) X ($8$-$w$), respectively.

Following S.F. Chang and D.G. Messerschmitt, *Manipulation and Compositing of MC-DCT Compressed Video,* IEEE Journal On Selected Areas of Communications, Vol. 13, No. 1, pp. 1-11, 1994, and S.F. Chang and D.G. Messerschmitt, *A New Approach to Decoding and Compositing Motion-Compensated DCT Based Images,* Proc. ICASSP 1993, Minneapolis, April 1993, it is readily seen that $x'$ can be expressed as a superposition of appropriate windowed and shifted versions of $x_1, ..., x_4$, *i.e.*

$$x' = \sum_{i=1}^{4} c_{i1} x_i c_{i2}$$

where $c_{i,j}$, i=1,...,4, j=1,2, are sparse 8 X 8 matrices of zeroes and ones that perform window and shift operations accordingly. The work of Chang and Messerschmitt *ibid*. suggests use of the distributive property of matrix multiplication

with respect to the DCT. Specifically, because $S^tS=I$, the equation indicated above may be rewritten as:

$$x'=\sum_{i=1}^{4} c_{i1}S^tSx_iS^tSc_{i2}.$$

By pre-multiplying both sides of this equation by *S*, and post-multiplying by $S^t$, one obtains:

$$X'=\sum_{i=1}^{4} C_{i1}X_iC_{i2}.$$

where $C_{ij}$ is the DCT of $c_{ij}$. Chang and Messerschmitt *ibid*. proposed pre-computation of the fixed matrices $C_{ij}$ for every possible combination of w and h, and computation of $X'$ directly in the DCT domain using the equation indicated above. Although most of the matrices $C_{ij}$ are not sparse, computations can still be saved on the basis of typical sparseness of $\{X_i\}$, and due to the fact the reference block might be aligned in one direction, *i.e.* either $w$=8 or $h$=8, which implies that the right-hand side of the equation above contains two terms only; or in both directions $w$=$h$=8, in which case $x' = x_1$ and hence no computations at all are needed.

The computation of $X'$ is performed even more efficiently by using two shortcuts. First, some of the matrices $c_{ij}$ are equal to each other for every given w and h. Specifically,

$$c_{11}=c_{21}=U_h \triangleq \begin{pmatrix} 0 & I_h \\ 0 & 0 \end{pmatrix}$$

$$c_{12}=c_{32}=L_w \triangleq \begin{pmatrix} 0 & 0 \\ I_w & 0 \end{pmatrix}$$

where $I_h$ and $I_w$ are identity matrices of dimension $h$ X $h$ and $w$ X $w$, respectively. Similarly,

$$c_{31}=c_{41}=L_{8-h},$$

and

$$c_{22}=c_{42}=U_{8-w}.$$

A second shortcut that saves computational resources is that, rather than fully pre-computing $C_{ij}$, it is more efficient to leave these matrices factorized into relatively sparse matrices. This scheme is more fully described by U.S. Patent No. 5,708,732, which is assigned to the same entity as is the present application, and which is hereby incorporated by reference as though reproduced in its entirety herein.

The best way to use the two observations mentioned above is the following:

First, the following fixed matrices are pre-computed

$$J_i \triangleq U_i(MA_1A_2A_3)^t, \qquad i=1,2,\ldots,8$$

and

$$K_i \triangleq L_i(MA_1A_2A_3)^t, \qquad i=1,2,\ldots,8.$$

These matrices are very structured and therefore, pre-multiplication by $K_i$ or $J_i$ can be implemented very efficiently. Next, $X'$ is computed using the expression

$$X'=S\begin{bmatrix} J_hB_2^tB_1^tP^tD\left(X_1DPB_1B_2J_w^t+X_2DPB_1B_2K_{8-w}^t\right)+ \\ K_{8-h}B_2^tB_1^tP^tD\left(X_3DPB_1B_2J_w^t+X_4DPB_1B_2K_{8-w}^t\right) \end{bmatrix}S'$$

which can easily be obtained from the first equation set forth above, or by its dual form

$$X'=S\begin{bmatrix} \left(J_hB_2^tB_1^tP^tDX_1+K_{h-8}B_2^tB_1^tP^tDX_3\right)DPB_1B_2J_w^t+ \\ \left(J_hB_2^tB_1^tP^tDX_2+K_{h-8}B_2^tB_1^tP^tDX_4\right)DPB_1B_2K_{8-w}^t \end{bmatrix}S',$$

depending on which one of these expressions requires less computations for the given *w* and *h*.

While this description indicates how transcoding is performed to yield a motion-compensated reference block $X'$, further processing must be performed (which is different) for each of a P frame to I frame conversion and B frame to B' frame conversion. In particular, the transcoding process for a P frame to I frame conversion (see function block 255, FIG. 6) utilizes simple addition between a current DCT block and a motion compensated block $X'$ from the reference frame, as indicated by function block 373 of FIG. 10. With B frame to B' frame conversion, however, it will be recalled that the DCT $X$ for the current frame represents a difference over either one or two other frames. Therefore, if, in performing transcoding, it has been determined that a DCT $X$ points to only one other frame, then the addition of $X$ to $X'$ is treated exactly as was the case for a P frame to I frame conversion. On the other hand, if it has been determined that a DCT $X$ represents difference between the current frame and an average of two other frames, then the new DCT must be computed to have un-weighted (e.g., full, as opposed to one-half) temporal dependency upon an unaffected reference frame; the new DCT $X''$ is therefore computed by adding ½$X'$ to $X$ and subtracting ½$X$^, as indicated by function block 373 of FIG. 10.

Transcoding of a de-quantized DCT 8 X 8 block which corresponds to the present picture, to incorporate information from a reference frame (and therefore eliminate need for temporal dependency upon the reference frame) is indicated with respect to FIGS. 9 and 10. FIG. 9 presents a block diagram indicating layout of the preferred editor, whereas FIG. 10 presents a block diagram of processes used in performing transcoding.

As was identified above in connection with FIG. 6 (conversion of P frame to I frame) and FIG. 7 (conversion of B frame to B' frame, i.e., either a Bforward frame or Bbackward frame), transcoding is performed in each case to eliminate dependency upon another particular reference frame. For example, if a bidirectional (B) frame is to be converted to a B' frame having only backward dependency (making its dependence similar to a P frame), processing indicated in FIG. 9 is performed to eliminate dependency upon a future frame (but dependencies upon a prior, I frame or P frame are not necessarily altered). In the discussion which follows, it will be assumed that the temporal dependency to be severed is in a backward direction, though the discussion equivalently applies for severing temporal dependencies in the forward direction.

As indicated by FIG. 9, in processing each DCT block of the current frame, a module 339 of the editor 341 fetches a motion vector h,w from memory 343, while second and third modules 345 and 347 fetches a DCT block for

the current frame and the four 8 X 8 DCT blocks, $X_1$, $X_2$, $X_3$, $X_4$, which are part of a reference I or P frame and which have been passed through a de-quantizer 348; if the reference frame is a P frame, then the reference frame must be converted to an I frame. For a reference frame which is an I frame, a fourth module 349 uses h and w to fetch the required J, K matrices, and thereby precalculate a set of fixed matrices. Once the proper region of the reference frame is located, the four 8 X 8 DCT blocks that comprise the information necessary to establish an anchor region within the reference frame are converted to a single 8 X 8 DCT block X' by a processing unit 351 for carrying out the inverse motion compensation calculation. The block thus determined is then combined (via an adder) with a 8 X 8 DCT block for the current frame, to incorporate the difference between the single DCT block from the anchor region and produce a new DCT block which is independent of the reference image frame. The various modules and units of the editor described are preferably implemented as instructions stored on machine readable media 357, such as software which can be run on a computer workstation having sufficient memory and image processing support hardware, or special purpose image editing machines. The instructions operate in the manner indicated by the block diagram 361 of FIG. 10, and perform processing functions 363-373, in the manner which have been described above.

Once all blocks have been processed, a new frame 355 is produced by the editor 341. This new frame 355 is output to a quantizer 353 as part of a converted frame to yield a new DCT block which has been compensated to remove temporal dependencies. A frame recording and output module 356 can store modified frames in a buffer 358, for temporal re-ordering, and then output both original frames from the memory 343 and converted frames from the buffer 358 in whichever temporal order is desired, responsive to user commands 362 which have been supplied to the editor.

## III. RATE CONTROL.

MPEG applications often use a constant bit rate, for example, such as where video images are stored on compact disk, with information being read at a constant rate of 1.5 megabits per second. It should be apparent that each of the I, P and B frames may have an amount of data that varies, depending upon picture content [at the time of encoding, each GOP is formatted to include information defining buffer size for each of these types of frames, and I, P and B buffers may have a variable fill-rate and a variable empty rate]. Furthermore, it will be recalled from the discussion earlier that P frames typically contain a fraction of data contained in I frames (e.g., 1/3$^{d}$) and that B frames typically contain a fraction of data contained in P frames (e.g., ¼$^{th}$). It should therefore be appreciated that to the extent that image processing in the compressed domain converts between different frame types, more or less data can be inserted within an image sequence which cause the associated buffers to be read improperly if not addressed.

Each coded frame contains a parameter which indicates the buffer status of the data stream. The goal of rate control is to ensure that the buffer requirements are satisfied. For example, in the splicing application mentioned above, two coded input image sequences each use the buffer in a predetermined way. The goal of rate control is to rate-adjust the coded image date near the splice point to result in a graceful transition from the buffer usage of the first image sequence to the buffer usage of the second image sequence.

In the preferred embodiment, rate control is performed as indicated in connection with FIG. 4. More particularly, quantizing of frames is performed to prevent decoder buffer underflow, whereas padding a particular frame with tail zeros (e.g., altering the run-length encoded version of each DCT block to use more zeros) is employed as a preferred method of addressing overflow. In severe cases, frame conversion can be performed by converting P frames to I frames, but it is preferred to address rate control using other methods, including quantization, data partitioning and bit-stuffing methods. In effect, detail can be added or sacrificed in transition frames in order to preserve smoothness of processing and avoid buffer errors.

The preferred editor described above provides for an efficient way of manipulating temporal order of images to place then proximate to other images, without having to fully decompress image frames. The preferred editor should therefore find widespread application to editing fields of motion picture, video, and other fields where images are used or transmitted.

Having thus described several exemplary implementations of the invention, it will be apparent that various alterations, modifications, and improvements will readily occur to those skilled in the art. Such alterations, modifications, and improvements, though not expressly described above, are nonetheless intended and implied to be within the spirit and scope of the invention. Accordingly, the foregoing discussion is intended to be illustrative only; the invention is limited and defined only by the following claims and equivalents thereto.

## APPENDICES

The following appendices are articles provided as part of this application to provide further detail in implementing embodiments of the invention described herein.

## APPENDIX A

SPLICING MPEG VIDEO STREAMS IN THE COMPRESSED DOMAIN

**Susie J. Wee and Bhaskaran Vasudev Hewlett-Packard Laboratories** 1501 Page Mill Road, MS 3U-4 Palo Alto, CA 94304

### Abstract

An algorithm is proposed for efficiently splicing two MPEG-coded video streams. The algorithm only processes the portion of each video stream that contains frames affected by the splice and it operates directly on the DCT coefficients and motion vectors of those frames. The algorithm achieves good visual performance with very low computational complexity, and incorporates rate control to prevent buffer underflow and overflow. If additional processing power is available, it can be used to further improve the quality of the spliced stream.

### INTRODUCTION

Splicing is a technique commonly used in video editing applications. When splicing uncompressed video, the solution is obvious: simply discard the unused frames and concatenate the remaining data. In other words, for uncompressed video, splicing is simply a cut-and-paste operation. The simplicity of this solution relies on the ordering and independence of the uncompressed video data.

Modern video compression algorithms such as MPEG use predictive methods to reduce the temporal redundancies inherent to typical video sequences. These methods achieve high degrees of compression, but in doing so, they create temporal dependencies in the coded data stream. These dependencies complicate a number of operations previously considered simple - splicing is one such operation.

In this work, we examine the problem of splicing two MPEG-coded video data streams. We develop a compressed-domain splicing algorithm that provides a natural tradeoff between computational complexity and compression efficiency; this algorithm can be tailored to meet the requirements of a particular system. The only previous work we found published in the literature on this topic was as part of a video editing system by Meng and Chang [1]. This paper begins by describing the problem of splicing MPEG-coded video streams. The proposed algorithm is then presented, and the frame conversion and rate control issues are discussed. The splicing algorithm was implemented in software and experimental results are given.

### SPLICING ALGORITHM

The goal of the splicing operation is to form a video data stream that contains the first $N_{head}$ frames of one video sequence and the last $N_{tail}$ frames of another video sequence. A naive splicing solution is to completely decompress the two video streams, cut-and-paste the decompressed video frames in the pixel domain, and recompress the result. With this method, each frame in the spliced video must be completely *recoded*. This method has a number of disadvantages including high computational requirements, high memory requirements, and low performance due to recoding.

In the proposed algorithm, the computational requirements are reduced by only processing the frames affected by the splice. For example, in most instances the only frames that need to be processed, or recoded are those in the GOPs affected by the head and tail cut points; at most, there will be one such GOP in the head data stream and one in the tail data stream. Furthermore, the data need not be decompressed into its pixel domain representation; improved performance is achieved by only *partially decompressing* the data stream into its motion vector and sparse DCT representation.

The splicing algorithm has three parts: form the head data stream which contains a series of frames from one sequence, form the tail data stream which contains a series of frames from another sequence, and match these data streams to form an MPEG-compliant data stream. The splice cut points of the head and tail streams can occur at any point in the IPB video sequence. One difficulty in splicing MPEG-coded video stems from the fact that the video data needed to decode a frame in the spliced sequence may depend on data from frames that are not included in the spliced sequence.

In the proposed algorithm, this temporal dependence problem is solved by converting the prediction modes of the appropriate frames. The frame conversions retain the coding order of the original MPEG. streams for frames included in the splice; this simplifies the computational requirements of the splicing algorithm. The algorithm results in an MPEG-compliant data stream with variable-sized GOPs, exploiting the fact that the GOP header does not specify the number of frames in the GOP or its structure, rather these are fully specified by the ordering and type of the picture

data in the coded data stream. The algorithm uses rate control to ensure that the resulting spliced stream satisfies the specified buffer constraints. The steps of the proposed splicing algorithm are described below.

**1. Form the head data stream.** The simplest case occurs when the cut for the head data occurs immediately after an I or P frame. When this occurs, all the relevant video data is contained in one contiguous portion of the data stream. The irrelevant portion of the data stream can simply be discarded, and the remaining relevant portion does not need to be processed. When the cut occurs immediately after a B frame, some extra processing is required because one or more B-frame predictions will be based on an anchor frame that is not included in the final spliced video sequence. In this case, the leading portion of the data stream is extracted up to the last I or P frame included in the splice, then the remaining B frames are converted to $B_{for}$ frames as described below in the *Frame Conversion* section.

**2. Form the tail data stream.** The simplest case occurs when the cut occurs immediately before an I frame. When this occurs, the video data preceding this frame may be discarded and the remaining portion does not need to be processed. When the cut occurs before a P frame the P frame must be converted to an I frame and the remaining data remains in tact. When the cut occurs before a B frame, extra processing is required because one of the anchor frames is not included in the spliced sequence. In this case, if the first non-B frame is a P frame, it must be converted to an I frame. Then, each of the first consecutive B frames must be converted to $B_{back}$ frames as described below in the *Frame Conversion* section.

**3. Match the head and tail data streams.** The IPB structure and the buffer parameters of the head and tail data streams determine the complexity of the matching operation. This step requires properly combining the two streams and then processing the frames near the splice point to ensure that the buffer constraints are satisfied. If the cut for the head data occurs immediately after an I or P frame, the combining operation simply requires concatenating the two streams; otherwise, the cut for the head data occurs immediately after a B frame, in which case the combining operation First places all the data of the head data stream up to the last consecutive B frames, then places the data for the first I or P frame of the tail sequence, then places the last consecutive B frames from the head sequence, and finally places the remaining data from the tail sequence. Then, the buffer parameters of the pictures surrounding the splice point are *matched* appropriately. In the simplest case, a simple requantization will suffice. However, in more difficult cases, a frame conversion will also be required to prevent decoder buffer underflow. This process is discussed further in the *Rate Control* section.

**FRAME CONVERSION**

The splicing algorithm may require converting frames between the I, P, and B prediction modes. Converting P or B frames to I frames is quite straightforward, however, converting frames between any other set of prediction modes is more difficult. Exact algorithms require performing motion estimation on the decompressed video-this process can dominate the computational requirements of the splicing algorithm. In this work, we use approximate algorithms that significantly reduce the number of computations required for the conversion. If additional computational power is available, then additional processing can be used to improve the quality of the splice.

The first two steps of the proposed splicing algorithm may require B-to-$B_{for}$, P-to-I, and B-to-$B_{back}$ frame conversions; and in the next section it will be shown that the third step may require I-to-P frame conversions. Each of these conversions is described below. In these conversions, the data is only *partially decoded* into its DCT and motion vector (DCT+MV domain) representation. This data is then processed into its new DCT+MV or DCT domain representation, and the result is recoded into the MPEG stream. The frame conversions will often require an inverse motion compensation operation. When this is needed, an efficient DCT-domain algorithm is used to calculate the new DCT coefficients of the motion-compensated prediction directly from the intraframe DCT coefficients of the anchor frame [2].

**P to I Frame Conversion.** In order to decode a P frame, the previous I and P frames in the GOP must first be decoded. Similarly, when converting a P frame to an I frame, the previous I and P frames in the GOP are first partially decoded into their DCT-domain representations. Then, for each P frame the DCT-domain inverse motion compensation algorithm is used to calculate the DCT coefficients of the motion compensated prediction, which is then added to the partially decoded residual DCT coefficients to form the intraframe DCT coefficient representation. Finally, the intraframe DCT coefficients are recoded into the MPEG stream.

**I to P Frame Conversion.** The difficulty of I to P frame conversion stems from the fact that no motion vectors are available for forward prediction. Because of the high computational cost of performing motion estimation, each macroblock of the frame is initially coded in intraframe mode or in forward prediction mode with a motion vector of (0,0). If additional computational power is available, a fast DCT-domain motion estimation algorithms is used to find better motion vectors to improve the motion compensated prediction of each block.

**B to $B_{for}$ Frame Conversion In P frames.** each macroblock can be coded in intraframe mode or with forward prediction. In B frames, each macroblock can be coded in intraframe mode or with forward, backward, or bidirectional prediction. We define a $B_{for}$ frame as one in which the macroblocks can be coded with forward prediction or in intraframe mode. The B to $B_{for}$ frame conversion requires each macroblock of the B frame to be converted to an allowable macroblock that only uses forward prediction. Thus, if the B macroblock was coded with forward prediction or in intraframe mode, it can be left as is, but if the macroblock was coded with backward or bidirectional prediction, it must be converted to an intraframe or forward predicted macroblock. In our conversion, the bidirectional macroblocks are converted to forward predicted macroblocks using the given forward motion vector. The new prediction is calculated and the residual DCT coefficients are adjusted appropriately. If the macroblock used backward prediction, then it is coded either in intraframe mode or with forward prediction with a motion vector of (0,0). As in the I to P conversion, if additional computational power is available, a fast DCT-domain motion estimation algorithm is used to refine the motion vector.

**B to $B_{back}$ Frame Conversion.** The $B_{back}$ frame is defined as one in which the macroblocks can be coded with backward prediction or in intraframe mode - this is essentially the dual of a $B_{for}$ frame but for backward prediction. Thus, the B to $B_{back}$ conversion is simply the dual of the B to $B_{for}$ conversion in which the forward and backward instances are reversed.

**RATE CONTROL**

In MPEG, each picture is coded into a variable-length data segment. However, the frame rate of the displayed sequence is constant. Achieving constant bit rate (CBR) transmission of the MPEG stream requires buffers at both the encoder and the decoder. In CBR transmission, the decoder buffer is filled at a constant rate and the I, P, or B picture data is emptied at regular time intervals corresponding to the frame rate of the sequence. If a picture contains a large amount of data, the buffer empties by a large amount. Thus, a stream that contains many large frames in close succession may cause the buffer to underflow, i.e. in a CBR channel, the picture data may not be received in time to be displayed.

The MPEG syntax requires the buffer size to be specified in the sequence header, thus it is specified once at the beginning of the stream and can not be changed. MPEG also requires a vbv_delay parameter to be specified in each picture header; vbv_delay indicates the length of time the picture start code must be stored in the buffer before it is decoded [3].

In the proposed splicing algorithm, a number of frames are converted between various temporal modes. I frames typically require more data than P or B frames; thus, if many I frames are created, the resulting data stream may cause the buffer to underflow. The splicing algorithm must incorporate some form of rate control to prevent buffer underflow and overflow.

The problem becomes one of matching the buffer parameters of the head and tail data streams. More precisely, the head and tail frames near the splice point should be processed so that the vbv_delay parameter of the remaining tail frames retain their original values. Thus, if we assume that the two original streams satisfy the buffer constraints, then by properly matching the head and tail streams we ensure that the spliced stream also satisfies buffer constraints.

Meng and Chang solve the rate control problem by inserting synthetic fadein pictures with low data rates [1]. They mention the possibility of applying a rate modification algorithm by using data partitioning, but do not develop this further.

In this algorithm, we achieve rate control with one of two methods. If the buffer occupancy of the pictures surrounding the splice point are similar, we requantize the DCT coefficients in the frames near the splice point to obtain a suitable match. If the resulting stream satisfies the buffer constraints and has acceptable video quality, then the splicing operation is complete. If the buffer occupancies are very different or if the requantized stream still causes the buffer to underflow, then a more drastic operation is needed to lower the bit rate. In this case, the I frames near the splice point in the head and tail streams are converted to P frames. Specifically, the last I frame in the head sequence and the second I frame in the tail sequence are converted to P frames. In addition, requantization is used to fine tune the buffer matching problem. Note that these frame conversions do not change the coding order of the picture data.

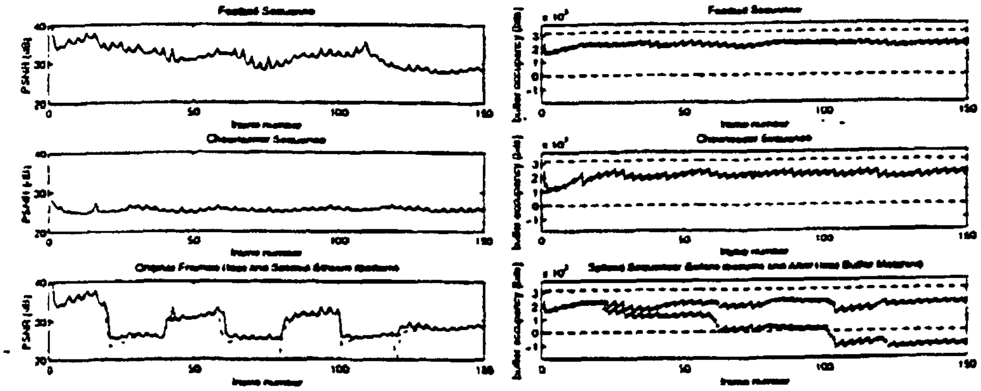

Figure 1: *PSNR and buffer occupancy of the original and spliced sequences.*

## EXPERIMENTAL RESULTS

The proposed algorithm was used to splice the MPEG-coded football and cheerleader video streams. Both sequences had resolutions of 352 by 240 pixels at 30 fps and were coded with a target data rate of 1.152 Mbps. The PSNR and buffer occupancy of the streams are shown in the top of Figure 1. The streams have 15-frame GOPs with one I frame, 4 P frames, and 10 B frames. The spliced stream switches between the football and cheerleader sequences every twenty frames.

If the streams are spliced without addressing rate control, the buffer underflows as shown in the lower trace in the lower right plot in Figure 1. When applying rate control with requantization, the buffer underflow problem is eliminated. The resulting PSNR is shown in the lower left plot in the figure. The solid line represents the PSNR of the original coded frames, and the dotted line represents the PSNR of the spliced stream.

## ACKNOWLEDGMENTS

The authors would like to thank Sam Liu for providing the MPEG parsing software that was used in these simulations.

## References

[1] J. Meng and S. F. Chang, "Buffer control techniques for compressed-domain video editing," in *Proceedings of IEEE International Symposium on Circuits and Systems,* (Atlanta, GA), May 1996.

[2] N. Merhav and B. Vasudev, "Fast inverse motion compensation algorithms for MPEG-2 and for partial DCT information," HP *Laboratories Technical Report, vol.* HPL-96-53, April 1996.

[3] *MPEG-2 International Standard,* Video Recommendation ITU-T H.262, ISO/IEC 13818-2, January 1995.

## APPENDIX B

TRANSCODING MPEG VIDEO STREAMS IN THE COMPRESSED DOMAIN

**Susie J. Wee, Bhaskaran Vasudev, and Sam Liu Hewlett-Packard Laboratories***

**Keywords:** MPEG, transcoding, video compression, video processing, compressed domain processing, splicing, reverse play.

### Abstract

Compressed digital video is becoming prevalent for video storage and communication. It is often desirable

to perform various video processing tasks on compressed video streams; however, operations once considered simple, such as translation and downscaling, become less straightforward when applied to compressed video. The naive solution of completely decompressing the video into the pixel domain, performing the processing, and recompressing the entire video sequence is inefficient and impractical.

We are investigating the problem of transcoding compressed video data from one standards-compliant data stream to another. The goal is to develop video transcoding algorithms that achieve high performance with computational efficiency. We have developed a number of compressed-domain algorithms that achieve this goal. We have implemented a software version of the video transcoder, capable of transcoding MPEG-compliant data streams between a number of modes.

### 1 Introduction

Video compression algorithms are being used to compress digital video for a wide variety of applications, including video delivery over the internet, advanced television broadcasting, as well as video storage and editing. The performance of modern compression algorithms such as MPEG is quite impressive - raw video data rates often can be reduced by factors of 15 - 80 without considerable loss in reconstructed video quality. However, the use of these compression algorithms often make other processing tasks quite difficult. For example, many operations once considered simple, such as splicing and downscaling, are much more complicated when applied to compressed video streams.

The goal of transcoding is to process one standards-compliant compressed video stream into another standards-compliant compressed video stream that has properties better suited for a particular application. This is useful for a number of applications. For example, a video server transmitting video over the internet may be restricted by stringent bandwidth requirements. In this scenario, a high-quality compressed bitstream, may need to be transcoded to a lower-rate compressed bitstream prior to transmission; this can be achieved by lowering the spatial or temporal resolution of the video or by requantizing the MPEG data. Another application may require MPEG video streams to be transcoded into streams that facilitate video editing functionalities such as splicing or fast-forward and reverse play; this may involve removing the temporal dependencies in the coded data stream. Finally, in a video communication system, the transmitted video stream may be subject to harsh channel conditions resulting in data loss; in this instance it may be useful to create a standards-compliant video stream that is more robust to channel errors.

In this paper, we present a series of compressed-domain image and video transcoding algorithms that were designed with the goal of achieving high performance with computational efficiency. We focus on video compression algorithms that rely on the block discrete cosine transform (DCT) and motion-compensated prediction. This is applicable to a number of predominant image and video coding standards including JPEG, MPEG-1, MPEG-2, H.261, and H.263. In the remainder of this paper we will focus on MPEG; however, many of these results apply to the other standards as well.

This paper begins with a brief description of some aspects of the MPEG video compression algorithm that are relevant to this work. The transcoding problem is then defined and the significance of compressed-domain transcoding is discussed. We provide a brief description of some of the image (intraframe) transcoding algorithms developed in earlier stages of this project. We then describe the video (interframe) transcoding algorithms that are currently under development.

### 2 MPEG Video Compression

Our transcoding algorithms are designed to exploit various features of the MPEG video compression standard. Detailed descriptions of the MPEG video compression standard can be found in [VK95. MPFL97]. In this section, we will briefly discuss some aspects of the standard that are relevant to this work.

MPEG codes video in a hierarchy of units called sequences, groups of pictures (GOPs), pictures, slices, and macroblocks. 16 x 16 blocks of pixels in the original video frames are coded as a macroblock. The macroblocks are scanned in a left-to-right, top-to-bottom fashion, and series of these macroblocks form a slice. All the slices in a frame comprise a picture, contiguous pictures form a GOP, and all the GOPs form the entire sequence. The MPEG syntax allows a GOP to contain any number of frames, but typical sizes range from 9 to 15 frames. Each GOP refreshes the temporal prediction by coding the first frame in intraframe mode. The remaining frames in the GOP can be coded with intraframe or interframe (predictive) coding techniques.

The MPEG algorithm allows each frame to be coded in one of three modes: intraframe (I), forward prediction (P), and bidirectional prediction (B). A typical IPB pattern in display order is:

$$\underbrace{I_0 B_1 B_2 \underbrace{P_3 B_4 B_5 P_6}_{group} B_7 B_8 P_9 B_{10} B_{11}}_{GOP} \underbrace{\underbrace{I_0 B_1 B_2 P_3}_{group} B_4 B_5 P_6 B_7 B_8 P_9 B_{10} B_{11}}_{GOP} I_0 \qquad (1)$$

I frames are coded independently of other frames. P frames depend on a prediction based on the preceding I or P frame. B frames depend on a prediction based on the preceding and following I or P frames. Notice that each B frame depends on data from a future-frame, i.e. a future frame must be (de)coded before the current B frame can be (de)coded. For this reason, the coding order is distinguished from the display order. The coding order for the sequence shown above is:

$$I_0P_3B_1B_2P_6B_4B_5P_9B_7B_8I_0B_{10}B_{11}P_3B_1B_3P_6B_4B_5P_9B_7B_8I_0B_{10}B_{11} \qquad (2)$$

MPEG requires the coded video data to be placed in the data stream in coding order.

A GOP always begins with an I frame. Typically, it includes the following (display order) P and B frames that occur before the next I frame, although the syntax also allows a GOP to contain multiple I frames. The sequence shown above contains two complete GOPs plus one I frame. The GOP header does not specify the number of I, P, or B frames in the GOP, nor does it specify the structure of the GOP - these are completely determined by the order of the data in the stream. Thus, there are no rules that restrict the size and structure of the GOP, although care should be taken to ensure that the buffer constraints are satisfied.

We find it useful to define a substructure called a *group*. A group is a unit that contains two consecutive I or P *anchor* frames and all the B frames whose prediction is based on those two anchors. The significance of the group is that it represents the smallest unit of dependencies for the B frames.

MPEG uses block motion-compensated prediction to reduce the temporal redundancies inherent to video. In block motion-compensated prediction, the current frame is divided into 16 x 16 pixel units called macroblocks. Each macroblock is compared to a number of 16 x 16 blocks in a previously coded frame. A single motion vector (MV) is used to represent this block with the best match. This block is used as a prediction of the current block, and only the error in the prediction, called the residual, is coded into the data stream.

The frames of a video sequence can be coded as an I, P, or B frame. In I frames, every macroblock must be coded in intraframe mode, i.e. no prediction is used. In P frames, each macroblock can be coded with forward prediction or in intraframe mode. In B frames, each macroblock can be coded with forward, backward, or bidirectional prediction or in intraframe mode. One MV is specified for each forward- and backward-predicted macroblock while two MVs are specified for each bidirectionally predicted macroblock. Thus, each P frame has a forward motion vector field and one anchor frame, while each B frame has a forward and backward motion vector field and two anchor frames.

MPEG uses DCT transform coding to code the intraframe and residual macroblocks. Four 8 x 8 block DCTs are used to encode each macroblock and the resulting DCT coefficients are quantized. Quantization usually results in a sparse representation of the data, i.e. most of the amplitudes of the quantized DCT coefficients are equal to zero. Thus, only the amplitudes and locations of the nonzero coefficients are coded into a data stream.

### 3 MPEG Transcoding: Problem Statement

The goal of MPEG transcoding is to process one MPEG-compliant video stream into another MPEG-compliant video stream that has properties better suited for a particular application. Transcoding differs from the encoding and decoding processes in that both the input and output of the transcoder are MPEG video streams. A naive solution to the transcoding problem, shown in the top of Figure 1, involves the following steps: first, the MPEG-coded video stream is completely decompressed into its pixel-domain representation; this pixel-domain video is then processed with the appropriate operation; and finally the processed video is recompressed into a new MPEG video stream. Such solutions are computationally expensive and have large memory requirements. In addition, the quality of the coded video can deteriorate with each recoding cycle.

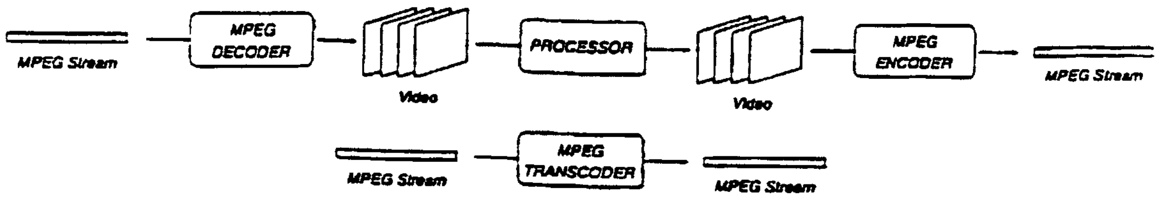


*Figure 1: MPEG Transcoding: the naive solution (top) and the compressed- domain solution (bottom).*

A more efficient transcoding solution, shown in the bottom of Figure 1, is to only partially decompress the video stream and perform the processing directly on the compressed-domain data. For some operations, further gains can be achieved by only processing the portions of the video stream that are affected by the transcoding operation. In this work, the affected portion of the video stream is partially decompressed into its motion vector (MV) and discrete cosine transform (DCT) representation. Computational requirements are reduced by eliminating the process of further decompressing the MV and DCT representation into the spatial domain, processing the spatial domain data, and recompressing the result into its new MV/DCT representation. For many compressed-domain transcoding operations, additional gains are achieved by exploiting the sparsity that is typical of quantized DCT coefficients.

### 4 Intraframe Transcoding Algorithms

Images and video frames coded with intraframe methods are represented by sets of block DCT coefficients. When using intraframe DCT coding, the original video frame is divided into 8 x 8 blocks, each of which is independently transformed with an 8 x 8 DCT. This imposes an artificial block structure that complicates a number of spatial processing operations, such as translation, downscaling, and filtering, that were considered straightforward in the pixel domain. A number of efficient exact and approximate compressed-domain algorithms have been developed for transcoding DCT-compressed images and video frames. A few of these are briefly described below, the reader is referred to the references for more detailed descriptions [MV96, MV94, KM95, SSV96, Mer96, NV95].

The rigid structure of the 8 x 8 block DCT makes simple operations like translation difficult. The difficulty stems from the fact that the DCT blocks of the processed image do not line up with the DCT blocks of the original image. For example, consider a 16 x 16 block of pixels that is transformed with four 8 x 8 block DCTs. If one wishes to calculate the DCT of an arbitrary 8 x 8 subblock of pixels, one must first calculate the four inverse DCTs, then extract the appropriate subblock, and finally perform the forward DCT operation. The inverse motion compensation developed in [MV96] performs this operation directly on the DCT-domain data. This algorithm can be extended to a global translation operation because global translation is a special case of inverse motion compensation in which all the motion vectors have the same value. By exploiting this fact, further optimizations can be performed to increase the efficiency of the translation transcoding operation.

Fast DCT-domain downscaling algorithms have been developed for integer subsampling factors [MV94]. When downscaling, one 8 x 8 DCT block of the downscaled image is determined from multiple 8 x 8 DCT blocks of the original image. In these algorithms, when downscaling by a factor of $N$ x $N$, each pixel of the downscaled image contains the average value of the corresponding, $N$ x $N$ pixels of the original image. An efficient algorithm was also developed for filtering images in the DCT domain [KM95]. This method can be used to apply two-dimensional symmetric, separable filters to DCT-coded images. In addition, approximate, multiplication-free versions of the transcoding algorithms described above have also been developed [Mer96, NV95].

### 5 Interframe Transcoding Algorithms

Video frames coded with interframe coding techniques are represented with motion vectors and residual DCT coefficients. These frames are coded based on a prediction from one or more previous coded frames; thus, properly decoding one frame requires first decoding one or more other frames. This temporal dependence among frames severely complicates a number of spatial and temporal processing techniques such as translation, downscaling, and splicing. In this section, we describe the interframe transcoding algorithms we have developed for temporal mode conversion, splicing, and reverse play of MPEG video streams.

### 5.1 Temporal Mode Conversion

Tile ability to transcode between arbitrary temporal modes adds a great deal of flexibility and power to compressed-domain video processing. In addition, it provides a method of trading off parameters to achieve various rate/robustness profiles. For example, an MPEG sequence consisting of all I frames, while least efficient from a compression viewpoint, is most robust to channel impairments in a video communication system. In addition, the I-frame MPEG video stream best facilitates many video editing operations such as splicing, downscaling, and reverse play. Finally, once an I-frame representation is available, the intraframe transcoding algorithms can be applied to each frame of the sequence to achieve the same effect on the entire sequence.

We briefly describe the steps required to transcode an MPEG video stream containing I, P, and B frames to an MPEG video stream containing only I frames. The more general problem of transcoding between any set of temporal modes is a more difficult task and is currently under investigation.

Transcoding an IPB MPEG video stream into an all I-frame MPEG video stream requires four steps:

1. Calculate the DCT coefficients of the motion-compensated prediction. This can be calculated from the intraframe coefficients of the previously coded frames by using the compressed-domain inverse motion compensation routine described in Section 4.

2. Form the intraframe DCT representation of each frame. This step simply involves adding the predicted DCT coefficients to the residual DCT coefficients.

3. Requantize the intraframe DCT coefficients. This step must be performed to ensure that the buffer constraints of the new stream are satisfied. Requantization may be used to control the rate of the new stream.

4. Reorder the coded data and update the relevant header information. If B-frames are used. the coding order of the IPB MPEG stream will differ from the coding order of the I-only MPEG stream. Thus, the coded data for each frame must be shuffled appropriately. In addition, the appropriate parameters of the header data must be updated.

### 5.2 Splicing

The goal of the splicing operation is to form a video data stream that contains the first $N_{head}$ frames of one video sequence and the last $N_{tail}$ frames of another video sequence. For uncoded video, the solution is obvious: simply discard the unused frames and concatenate the remaining data. Two properties make this solution obvious: (1) the data needed to represent each frame is self-contained, i.e. it is independent of the data from other frames; and (2) the uncoded video data has the desirable property of original ordering, i.e. the order of the video data corresponds to the display order of the video frames. MPEG-coded video data does not necessarily retain these properties of temporal independence or original ordering (although it can be forced to do so at the expense of compression efficiency). This complicates the task of splicing two MPEG-coded data streams.

We have developed a flexible algorithm that splices two streams directly in the compressed domain. The algorithm allows a natural tradeoff between computational complexity and compression efficiency, thus it can be tailored to the requirements of a particular system. The proposed algorithm possesses a number of attributes. A minimal number of frames are decoded and processed, thus leading to low computational requirements while preserving compression efficiency. In addition, the head and tail data streams can be processed separately and the final spliced data stream is a simple matching of the two streams. Lastly, the order of the coded video data remains intact.

A naive splicing solution is to completely decompress the video, splice the decoded video frames, and recompress the result. With this method, every frame in the spliced video sequence must be recompressed. This method has a number of disadvantages, including high computational requirements, high memory requirements, and low performance (multiple recoding cycles may deteriorate the video data).

The computational requirements are reduced by only processing the frames affected by the splice, and by only decoding the frames needed for that processing. Specifically, the only frames that need to be recoded are those in the groups affected by the head and tail cut points; at most, there will be one such group in the head data stream and one in the tail data stream, Furthermore, the only additional frames that need to be decoded are the I and P frames in the two GOPs affected by the splice.

The proposed algorithm results in an MPEG-compliant data stream with variable-sized GOPs. This exploits the fact that the GOP header does not specify the number of frames in the GOP or its structure; rather these are fully specified by the order of the data in the coded data stream.

We briefly describe each step of the splicing operation below. Further discussion is included in [WV97].

1. Form the head data stream. The simplest case occurs when the cut for the head data occurs immediately after an I or P frame. When this occurs, all the relevant video data is contained in one contiguous portion of the data stream. The irrelevant portion of the data stream can simply be discarded, and the remaining relevant portion does not need to be processed. When the cut occurs immediately after a B frame, some extra processing is required because one or more B-frame predictions will be based on an anchor frame that is not included in the final spliced video sequence. In this case, the leading portion of the data stream is extracted up to the last I or P frame included in the splice, then the remaining B frames are converted to $B_{for}$ frames, which have a prediction that only depends on earlier frames in the sequence.

2. Form the tail data stream. The simplest case occurs when the cut occurs immediately before an I frame. When this occurs, the video data preceding this frame may be discarded and the remaining portion does not need to be processed. When the cut occurs before a P frame, the P frame must be converted to an I frame and the remaining data remains in tact. When the cut occurs before a B frame, extra processing is required because one of the anchor frames is not included in the spliced sequence. In this case, if the first non-B frame is a P frame, it must be converted to an I frame. Then, each of the first consecutive B frames must be converted to $B_{back}$ frames, which have a prediction that only depends on later frames in the sequence.

3. Match the head and tail data streams. The IPB structure and the buffer parameters of the head and tail data streams determine the complexity of the matching operation. This step requires properly combining the two streams and then processing the frames near the splice point to ensure that the buffer constraints are satisfied. If the cut for the head data occurs immediately after an I or P frame, the combining operation simply requires concatenating the two streams; otherwise, the cut for the head data occurs immediately after a B frame, in which case the combinining operation first places all the data of the head data stream up to the last consecutive B frames, then places the data for the first I or P frame of the tail sequence, then places the last consecutive B frames from the head sequence, and finally places the remaining data from the tail sequence. Then, the buffer parameters of the pictures surrounding the splice point are *matched* appropriately. In the simplest case, a simple requantization will suffice. However, in more difficult cases, a frame conversion will also be required to prevent decoder buffer underflow.

The first two steps may require converting frames between the I, P, and B prediction modes. Converting P or B frames to I frames and converting B frames to $B_{for}$ or $B_{back}$ is quite straightforward, however, conversion between any other set of prediction modes is more complicated. Exact algorithms involve performing motion estimation on the decoded video - this process can dominate the computational requirements of the algorithm. We are currently developing approximate algorithms that significantly reduce the computations required for this conversion.

### 5.3 Reverse Play

The goal of reverse-play transcoding is to create a new MPEG data stream that, when decoded, displays the video frames in the reverse order from the original MPEG data stream. For uncoded video the solution is simple: reorder the video frame data in reverse order. The simplicity of this solution relies on two properties: the data for each video frame is self-contained and it is independent of its placement in the data stream. These properties typically do not hold true for MPEG-coded video data.

Reverse-play transcoding is difficult because MPEG compression is not invariant to changes in frame order, e.g. reversing the order of the input frames will not simply reverse the order of the output MPEG stream. Furthermore, reversing the order of the input video frames does not result in a "reversed" motion vector field. However, if the transcoding is performed carefully, much of the motion vector information contained in the original MPEG video stream can be used to save a significant number of computations.

We have developed a reverse-play transcoding algorithm that operates directly on the compressed domain data. The proposed algorithm is simple and achieves high performance with low computational and memory requirements. This algorithm only decodes the following . data from the original MPEG data stream: I frames must be partially decompressed into their DCT representation and P frames must be partially decompressed to their MV/DCT representation, while for B frames only the forward and backward motion vector fields need to be decoded.

The proposed reverse-play transcoding algorithm has the following steps:

1. Convert the P frames to I frames. This operation can be performed directly on the DCT coefficients by using the compressed-domain inverse motion compensation algorithm described in Section 4.

2. Exchange the forward and backward motion vector fields used in each B frame. This step exploits the symmetry of the B frame prediction process. In the reversed stream, the B frames will have the same two anchor frames,

but in the reverse order. Thus, the forward prediction field can simply be exchanged with the backward prediction field, resulting in significant computational savings. Notice that only the motion vector fields need to be decoded for the B frames.

3. Requantize the DCT coefficients. This step must be performed to ensure that the buffer constraints of the new stream are satisfied. Requantization may be used to control the rate of the new stream.

4. Properly reorder the frame data and update the relevant header information. If no B frames are used, then the reordering process is quite straightforward. However, when B frames are used, care must be taken to properly reorder the data from the original *coding* order to reverse *coding* order. In addition, the appropriate parameters of the header data must be updated.

We have developed a very simple algorithm for reverse-play transcoding. The resulting MPEG video stream is slightly larger than the original MPEG stream because of the extra data that results from converting the P frames to I frames. However, since much of the coding gain comes from compressing the B frames, the increase in data rate is modest. If extra computational power is available, the compression can be recovered by converting the new I frames to P frames. One approach is to perform the full motion estimation to get the new forward motion vector field; however, this is a computationally expensive operation. We are currently developing approximate algorithms that can significantly reduce these computational costs by exploiting the motion vector information contained in the original MPEG stream.

### 6 Final Remarks

We have investigated the problem of transcoding MPEG video streams in the compressed domain. In earlier stages of this project, efficient intraframe (image) transcoding algorithms were developed for inverse motion compensation, translation, downscaling, and filtering. More recently, we have developed interframe (video) transcoding algorithms for temporal mode conversion to I frames, splicing, and reverse play.

Preliminary video transcoding algorithms for translation, downscaling, and filtering can be obtained by first converting the temporal mode to I frames, and then applying the appropriate intraframe transcoding methods to the I frames. However, the conversion to all I frames leads to an increase in bit rate. Current work involves developing true interframe transcoding solutions that achieve high performance while preserving compression efficiency.

### 7 References

[KM95] R. Kresch and N. Merhav. Fast DCT domain filtering using the DCT and the DST. *HP Laboratories Technical Report*, HPL-95-140, December 1995.

[Mer96] N. Merhav. Multiplication- free approximate algorithms for compressed domain linear operations on images. *HP Laboratories Technical Report*, HPL-96-111, July 1996.

[MPFL97] Joan L. Mitchell, W.B. Pennebaker, C.E. Fogg, and D.J. LeGall. *MPEG* Video Compression Standard. Digital Multimedia Standards Series. Chapman and Hall, 1997.

(MV94] N. Merhav and B. Vasudev. A transform domain approach to spatial domain image downscaling. *HP Laboratories Technical Report*, HPL-94-116, December 1994.

[MV96] N. Merhav and B. Vasudev. Fast inverse motion compensation algorithms for MPEG-2 and for partial DCT information. HP *Laboratories Technical Report,* HPL-96-53, April 1996.

[NV95] B.K. Natarajan and B. Vasudev. A fast approximate algorithm for scaling down digital images in the DCT domain. In *Proceedings of the IEEE International Conference on Image Processing*, Washington, D.C., October 1995.

[SSV96] B. Shen, I.K. Sethi, and B. Vasudev. Digital video blue screen editing in compressed domain. In *Proceedings of the IS&T/SPIE Visual Communications and Image Processing Conference,* San Jose, CA, February 1996.

[VK95] B. Vasudev and K. Konstantinides. *Image and Video Compression Standards: Algorithms and Architectures.* Kluwer Academic Publishers, 1995.

[WV97] S.J. Wee and B. Vasudev. Splicing MPEG video streams in the compressed domain. In *Proceedings of the IEEE International Conference on Multimedia Signal Processing.* Princeton, NJ, June 1997.

## Claims

**1.** A method of editing a compressed input image sequence and producing therefrom a compressed output image sequence, the input sequence including at least one group of images that does not depend upon any other images for reconstruction from a compressed format, the group of images having at least one compressed dependent frame that contains data for reconstructing one image based upon data from a second image in the group of images, said method using a computing device and comprising:

receiving (225) with the compressed input image sequence;

using the computing device to convert (227,229) a dependent frame to a compressed data format that does not depend upon the second image without decompressing all images in the group of images to an image domain;

editing data using the computing device, by altering (231) relative temporal order of an image represented by the dependent frame with respect to at least one other image in the sequence; and

using (233) the computing device to produce the compressed output image sequence from the data which has been edited by the computing device.

**2.** A method according to claim 1, further comprising using the computing device to produce the compressed output image sequence in a format that is compliant with a Moving Pictures Expert Group ("MPEG") Standard.

**3.** A method according to claim 1, wherein using the computing device to convert the dependent frame includes:

determining (363) discrete cosine transform ("DCT") coefficients for the dependent frame; and

modifying (371) the DCT coefficients to incorporate image data corresponding to the second image, to yield modified DCT coefficients;

wherein the dependent frame is thereby modified so as to no longer depend upon data values from the second image for decompression.

**4.** A method according to claim 1, further comprising using the computing device to edit the compressed input image sequence such that the compressed output image sequence represents a reverse-play-order of images represented by the input image sequence.

**5.** A method according to claim 1, wherein the compressed input image sequence is compliant with a Moving Pictures Expert Group ("MPEG") Standard, including independent ("I") frames, prediction ("P") frames and bidirectional ("B") frames, and wherein using the computing device to convert the dependent frame to a compressed data format includes:

using the computing device to perform a conversion upon the dependent frame, including one of

conversion (248) of a P frame to an I frame by removing dependence of the P frame upon data from any other frame,

conversion (303) of a B frame to a B frame having no dependence upon data from future frames, such that the B frame as converted only depends upon one or more prior frames in the sequence of data, and

conversion (271) of a B frame to a B frame having no dependence upon data from prior frames, such that

the B frame as converted only depends upon one or more future frames in the sequence of data.

**6.** A method according to claim 1, wherein using the computing device to convert the dependent frame includes converting the dependent frame without decompressing any image to an image domain.

**7.** An apparatus that converts an input sequence of compressed input images into an output sequence of compressed images, the input sequence including at least one group of images that does not depend upon any other images for reconstruction from a compressed format, the group of images having at least one compressed dependent frame that contains data for reconstructing one image based upon data from a second image in the group of images, said apparatus comprising:

memory (343) that receives the input sequence; and

an editor (153) that receives user commands to edit the input sequence and that, responsive to user commands, alters the temporal order of at least one image from the compressed image sequence including an image represented by the dependent frame with respect to another image in the input sequence, the editor including one of firmware, hardware and software that

converts (227,229) the dependent frame to a compressed data format that does not depend upon the second image, without decompressing all images in the group of images to an image domain,

alters (231) the relative temporal order of at least one image in the sequence including an image represented by the dependent frame, and

formats (233) the compressed output image sequence to reflect the altered temporal order.

**8.** An apparatus according to claim 7, further comprising means for formatting the compressed output image sequence to represent the input image sequence in reverse-play-order.

**9.** An apparatus operative to receive compressed image data complying with a Moving Pictures Experts' Group (M. P.E.G.) Standard and including information representing a sequence of independent (I) frames, prediction (P) frames and bidirectional (B) frames, to edit temporal order of images represented by the sequence in response to a set of one or more commands, and to provide an output of image data that is compressed and compliant with a MPEG Standard, said apparatus comprising:

machine readable media; and

instructions stored on the machine readable media that instruct a machine to receive data representing I, P and B frames,

perform, with respect to a particular frame selected in response to the set of one or more commands, a conversion including one of

(a) conversion of a P frame to an I frame by removing dependence of the P frame upon data from any other frame,

(b) conversion of a B frame to a B frame having no dependence upon data from future frames, such that the B frame as converted only depends upon one or more prior frames in the sequence of data, and

(c) conversion of a B frame to a B frame having no dependence upon data from prior frames, such that the B frame as converted only depends upon one or more future frames in the sequence of data, and

alter relative temporal order of at least one image represented by the sequence including an image represented by the dependent frame with respect to another image in response to the commands, and produce therefrom the output of compressed data,

wherein the conversion is automatically selected in response to the set of one or more commands and in response to whether the particular frame is an I, P or B frame to eliminate a temporal dependency between any frame

representing the at least one image which is to be altered in temporal order with respect to another image.

**10.** An apparatus according to claim 9, wherein the particular frame is part of a group of pictures (GOP) and wherein the instructions instruct a machine to perform the conversion by:

converting the particular frame to an image domain; and
re-converting, once a particular image represented by the particular frame has been altered in temporal order with respect to another image, the particular image to one of an I frame and P frame and B frame format;

whereby the sequence of images has been edited to produce a MPEG compliant output without fully decompressing an entire GOP to an image domain.

**11.** An apparatus according to claim 9, wherein the instructions instruct a machine to perform the conversion in a transform-domain, without decompressing the particular frame to an image domain.

**12.** An apparatus according to claim 9, wherein the instructions instruct a machine to perform the conversion by directly altering motion vectors and discrete cosine transform coefficients, without performing an inverse discrete cosine transformation.

**13.** An apparatus according to claim 9, wherein said apparatus further provides capability to play a sequence of images backward and wherein:

the instructions instruct a machine to alter temporal order by reversing temporal dependencies of each of a plurality of frames selected from the group of I, P and B frames.

**Patentansprüche**

**1.** Ein Verfahren zum Editieren einer komprimierten Eingangsbildsequenz und zum Erzeugen einer komprimierten Ausgangsbildsequenz aus derselben, wobei die Eingangssequenz zumindest eine Gruppe von Bildern enthält, die nicht von anderen Bildern zum Rekonstruieren aus einem komprimierten Format abhängt, wobei die Gruppe von Bildern zumindest einen komprimierten abhängigen Rahmen aufweist, der Daten zum Rekonstruieren eines Bildes basierend auf Daten von einem zweiten Bild in der Gruppe von Bildern enthält, wobei das Verfahren eine Rechenvorrichtung verwendet und folgende Schritte aufweist:

Empfangen (225) mit der komprimierten Eingangsbildsequenz;

Verwenden der Rechenvorrichtung zum Umwandeln (227, 229) eines abhängigen Rahmens in ein komprimiertes Datenformat, das nicht von dem zweiten Bild abhängt, ohne Dekomprimieren aller Bilder in der Gruppe von Bildern in einen Bildbereich;

Editieren von Daten unter Verwendung der Rechenvorrichtung, durch Ändern (231) der relativen zeitlichen Reihenfolge eines Bildes, das durch den abhängigen Rahmen dargestellt wird, im Hinblick auf zumindest ein anderes Bild in der Sequenz; und

Verwenden (233) der Rechenvorrichtung, um die komprimierte Ausgangsbildsequenz aus den Daten zu erzeugen, die durch die Rechenvorrichtung editiert wurden.

**2.** Ein Verfahren gemäß Anspruch 1, das die Rechenvorrichtung ferner verwendet, um die komprimierte Ausgangsbildsequenz in einem Format zu erzeugen, das einem Standard der Moving Pictures Expert Group ("MPEG") entspricht.

**3.** Ein Verfahren gemäß Anspruch 1, bei dem das Verwenden der Rechenvorrichtung zum Umwandeln des abhängigen Rahmens folgende Schritte umfaßt:

Bestimmen (363) von DTC-Koeffizienten (DTC = discrete cosine transform) für den abhängigen Rahmen; und

Modifizieren (371) der DCT-Koeffizienten, um Bilddaten einzulagern, die dem zweitem Bild entsprechen, um

modifizierte DCT-Koeffizienten zu ergeben;

wobei der abhängige Rahmen dadurch modifiziert wird, um nicht länger von Datenwerten von dem zweitem Bild zur Dekomprimierung abzuhängen.

**4.** Ein Verfahren gemäß Anspruch 1, das ferner das Verwenden der Rechenvorrichtung zum Editieren der komprimierten Eingangsbildsequenz aufweist, derart, daß die komprimierte Ausgangsbildsequenz eine umgekehrte Abspielreihenfolge der Bilder darstellt, die durch die Eingangsbildsequenz dargestellt werden.

**5.** Ein Verfahren gemäß Anspruch 1, bei dem die komprimierte Eingangsbildsequenz einem Standard der Moving Pictures Expert Group ("MPEG") entspricht, einschließlich unabhängiger ("I") Rahmen, Vorhersage-("P")-Rahmen und bidirektionaler ("B") Rahmen, und bei dem das Verwenden der Rechenvorrichtung zum Umwandeln des abhängigen Rahmens in ein komprimiertes Datenformat folgende Schritte umfaßt:

Verwenden der Rechenvorrichtung zum Ausführen einer Umwandlung bezüglich des unabhängigen Rahmens, das einen der folgenden umfaßt:

Umwandeln (248) eines P-Rahmes in einen I-Rahmen durch Entfernen der Abhängigkeit des P-Rahmens von Daten von einem anderen Rahmen;

Umwandeln (303) eines B-Rahmens in einen B-Rahmen, der keine Abhängigkeit von Daten von zukünftigen Rahmen aufweist, derart, daß der B-Rahmen umgewandelt nur von einem oder mehreren vorangehenden Rahmen in der Datensequenz abhängt; und

Umwandeln (271) eines B-Rahmens in einen B-Rahmen, der keine Abhängigkeit von Daten von vorangehenden Rahmen aufweist, derart, daß der B-Rahmen umgewandelt nur von einem oder mehreren zukünftigen Rahmen in der Datensequenz abhängt.

**6.** Ein Verfahren gemäß Anspruch 1, bei dem das Verwenden der Rechenvorrichtung zum Umwandeln des abhängigen Rahmens das Umwandeln des abhängigen Rahmens ohne Dekomprimieren eines Bildes in einen Bildbereich umfaßt.

**7.** Eine Vorrichtung, die eine Eingangssequenz aus komprimierten Eingangsbildern in eine Ausgangssequenz aus komprimierten Bildern umwandelt, wobei die Eingangssequenz zumindest eine Gruppe von Bildern umfaßt, die nicht von anderen Bildern zur Rekonstruierung aus einem komprimierten Format abhängt, wobei die Gruppe von Bildern zumindest einen komprimierten abhängigen Rahmen aufweist, der Daten zum Rekonstruieren eines Bildes basierend auf Daten von einem zweitem Bild in der Gruppe von Bildern enthält, wobei die Vorrichtung folgende Merkmale aufweist:

einen Speicher (343), der die Eingangssequenz empfängt; und

einen Editor (153), der Benutzerbefehle zum Editieren der Eingangssequenz empfängt und der ansprechend auf Benutzerbefehle die zeitliche Reihenfolge von zumindest einem Bild aus der komprimierten Bildsequenz ändert, einschließlich eines Bilds, das durch den abhängigen Rahmen dargestellt ist, im Hinblick auf ein anderes Bild in der Eingangssequenz, wobei der Editor eines aus Firmware, Hardware und Software umfaßt, das

den abhängigen Rahmen in ein komprimiertes Datenformat umwandelt (227, 229), das nicht von dem zweiten Bild abhängt, ohne Dekomprimieren aller Bilder in der Gruppe von Bildern in einen Bildbereich;

die relative zeitliche Reihenfolge von zumindest einem Bild in der Sequenz ändert (231), einschließlich eines Bilds, das durch den abhängigen Rahmen dargestellt wird; und

die komprimierte Ausgangsbildsequenz formatiert (233), um die geänderte zeitliche Reihenfolge zu reflektieren.

**8.** Eine Vorrichtung gemäß Anspruch 7, die ferner eine Einrichtung zum Formatieren der komprimierten Ausgangsbildsequenz aufweist, um die Eingangsbildsequenz in umgekehrter Spielreihenfolge darzustellen.

**9.** Eine Vorrichtung, die wirksam ist, um komprimierte Bilddaten zu empfangen, die einem Standard der Moving Pictures Experts' Group (M.P.E.G.) entsprechen und Informationen umfassen, die eine Sequenz aus unabhängigen (I) Rahmen, Vorhersage-(P)-Rahmen und bidirektionalen (B) Rahmen darstellen, um die zeitliche Reihenfolge von Bildern zu editieren, die durch die Sequenz dargestellt sind, ansprechend auf einen Satz aus einem oder mehreren Befehlen, und um eine Ausgabe von Bilddaten zu liefern, die komprimiert sind und zu einem MPEG-Standard konform sind, wobei die Vorrichtung folgende Merkmale aufweist:

ein maschinenlesbares Medium; und

Anweisungen, die auf dem maschinenlesbarem Medium gespeichert sind, die eine Maschine anweisen zum Empfangen von Daten, die I-, P- und B-Rahmen darstellen,

Ausführen einer Umwandlung im Hinblick auf einen bestimmten Rahmen, der ansprechend auf den Satz aus einem oder mehreren Befehlen ausgewählt wird, was folgendes umfaßt:

(a) Umwandeln von einem P-Rahmen in einen I-Rahmen durch Entfernen der Abhängigkeit des P-Rahmens von Daten aus einem anderen Rahmen;

(b) Umwandeln von einem B-Rahmen in einen B-Rahmen, der keine Abhängigkeit von Daten von zukünftigen Rahmen aufweist, derart, daß der B-Rahmen umgewandelt nur von einem oder mehreren vorangehenden Rahmen in der Datensequenz abhängt; und

(c) Umwandeln eines B-Rahmens in einen B-Rahmen, der keine Abhängigkeit von Daten von vorangehenden Rahmen aufweist, derart, daß der B-Rahmen umgewandelt nur von einem oder mehreren zukünftigen Rahmen in der Datensequenz abhängt; und

Ändern der relativen zeitliche Reihenfolge von zumindest einem Bild, das durch die Sequenz dargestellt ist, einschließlich eines Bildes, das durch den abhängigen Rahmen dargestellt ist, im Hinblick auf ein anderes Bild, ansprechend auf die Befehle, und Erzeugen der Ausgabe von komprimierten Daten aus derselben;

wobei die Umwandlung automatisch ausgewählt wird, ansprechend auf den Satz von einem oder mehreren Befehlen und ansprechend darauf, ob der bestimmte Rahmen ein I-, P- oder B-Rahmen ist, um eine zeitliche Abhängigkeit zwischen jedem Rahmen, der das zumindest eine Bild darstellt, das in zeitlicher Reihenfolge im Hinblick auf das andere Bild geändert werden soll, zu beseitigen.

**10.** Eine Vorrichtung gemäß Anspruch 9, bei der der bestimmte Rahmen Teil einer Gruppe von Bildern (GOP) ist, und bei der die Befehle eine Maschine anweisen, die Umwandlung auszuführen durch:

Umwandeln des bestimmten Rahmens in einen Bildbereich; und

Erneutes Umwandeln des bestimmten Bildes in entweder ein I-Rahmen- oder ein P-Rahmen- oder ein B-Rahmen-Format, sobald ein bestimmtes Bild, das durch den bestimmten Rahmen dargestellt ist, in zeitlicher Reihenfolge im Hinblick auf ein anderes Bild geändert wurde;

wodurch die Sequenz von Bildern editiert wurde, um eine MPEG-konforme Ausgabe zu erzeugen, ohne eine gesamte GOP vollständig in einen Bildbereich zu dekomprimieren.

**11.** Eine Vorrichtung gemäß Anspruch 9, bei der die Befehle eine Maschine anweisen, die Umwandlung in einem Transformationsbereich auszuführen, ohne den bestimmten Rahmen in einen Bildbereich zu dekomprimieren.

**12.** Eine Vorrichtung gemäß Anspruch 9, bei der die Befehle eine Maschine anweisen, die Umwandlung auszuführen, durch direktes Ändern von Bewegungsvektoren und Diskrete-Kosinustransformation-Koeffizienten, ohne eine inverse diskrete Kosinustransformation auszuführen.

**13.** Eine Vorrichtung gemäß Anspruch 9, bei der die Vorrichtung ferner eine Fähigkeit schafft, eine Sequenz von Bildern rückwärts zu spielen, und bei der:

die Befehle eine Maschine anweisen, die zeitliche Reihenfolge zu ändern, durch Umkehren der zeitlichen

Abhängigkeiten von jedem einer Mehrzahl von Rahmen, die aus der Gruppe aus I-, P- und B-Rahmen ausgewählt sind.

## Revendications

1. Procédé d'édition d'une séquence d'images d'entrée compressées et de production à partir de là d'une séquence d'images de sortie compressées, la séquence d'entrée comportant au moins un groupe d'images ne dépendant d'aucune autre image pour la reconstruction à partir d'un format compressé, le groupe d'images comportant au moins une trame dépendante compressée qui contient des données pour reconstruire une image en se basant sur les données provenant d'une deuxième image du groupe d'images, ledit procédé utilisant un dispositif de calcul et comprenant :

   la réception (225) avec la séquence d'images d'entrée compressées ;
   l'utilisation du dispositif de calcul pour convertir (227, 229) une trame dépendante en un format de données compressées qui ne dépend pas de la deuxième image sans décompresser toutes les images du groupe d'images dans un domaine d'images ;
   l'édition de données en utilisant le dispositif de calcul en modifiant (231) l'ordre temporel relatif d'une image représentée par la trame dépendante par rapport au moins à une autre image de la séquence ; et
   l'utilisation (233) du dispositif de calcul pour produire la séquence d'images de sortie compressées à partir des données qui ont été éditées par le dispositif de calcul.

2. Procédé selon la revendication 1, comprenant en outre le dispositif de calcul pour produire la séquence d'images de sortie compressées dans un format conforme à la norme "Moving Pictures Expert Group" ("MPEG").

3. Procédé selon la revendication 1, dans lequel l'utilisation du dispositif de calcul pour convertir la trame dépendante comporte :

   la détermination (363) de coefficients de transformation en cosinus discret ("DCT") pour la trame dépendante ; et
   la modification (371) des coefficients de DCT pour incorporer des données d'images qui correspondent à la deuxième image, pour fournir des coefficients de DCT modifiés ;

   dans lequel la trame dépendante est modifiée de telle sorte à ne plus dépendre des valeurs de données de la deuxième image pour la décompression.

4. Procédé selon la revendication 1, comprenant en outre l'utilisation du dispositif de calcul pour éditer la séquence d'images d'entrée compressées de façon que la séquence d'images de sortie compressées représente un ordre de déroulement inverse des images représentées par la séquence d'images d'entrée.

5. Procédé selon la revendication 1, dans lequel la séquence d'images d'entrée compressées est conforme à une norme "Moving Pictures Expert Group"("MPEG"), comportant des trames indépendantes ("I"), des trames de prédiction ("P") et des trames bidirectionnelles ("B") et dans lequel l'utilisation du dispositif de calcul pour convertir la trame dépendante en un format de données compressées comporte :

   l'utilisation du dispositif de calcul pour effectuer une conversion sur la trame dépendante comportant une parmi la conversion (248) d'une trame P en une trame I en éliminant la dépendance de la trame P par rapport aux données d'une quelconque autre trame,
   la conversion (303) d'une trame B en une trame B n'ayant pas de dépendance par rapport aux données des trames futures, de telle sorte que la trame B convertie ne dépende que d'une ou plusieurs trames antérieures de la séquence de données, et
   la conversion (271) d'une trame B en une trame B n'ayant pas de dépendance par rapport aux données des trames antérieures, de telle sorte que la trame B convertie ne dépende que d'une ou plusieurs trames futures de la séquence de données.

6. Procédé selon la revendication 1, dans lequel l'utilisation du dispositif de calcul pour convertir la trame dépendante comporte la conversion de la trame dépendante sans décompresser aucune image dans un domaine d'images.

**7.** Dispositif qui convertit une séquence d'entrée d'images d'entrée compressées en une séquence de sortie d'images compressées, la séquence d'entrée comportant au moins un groupe d'images ne dépendant d'aucune autre image pour la reconstruction à partir d'un format compressé, le groupe d'images comportant au moins une trame dépendante compressée qui contient des données pour reconstruire une image en se basant sur les données provenant d'une deuxième image du groupe d'images, ledit dispositif comprenant :

une mémoire (343) qui reçoit la séquence d'entrée ; et
un éditeur (153) qui reçoit des commandes d'utilisateur pour éditer la séquence d'entrée et qui, réagissant aux commandes d'utilisateur, modifie l'ordre temporel d'au moins une image de la séquence d'images compressées comportant une image représentée par la trame dépendante par rapport à une autre image de la séquence d'entrée, l'éditeur comportant un élément parmi un progiciel, du matériel et un logiciel qui
convertit (227, 229) la trame dépendante en un format de données compressées ne dépendant pas de la deuxième image, sans décompresser toutes les images du groupe d'images dans un domaine d'image,
modifie (231) l'ordre temporel relatif d'au moins une image de la séquence comportant une image représentée par la trame dépendante, et
formate (233) la séquence d'images de sortie compressées pour représenter l'ordre temporel modifié.

**8.** Dispositif selon la revendication 7, comprenant en outre un moyen pour formater la séquence d'images de sortie compressées pour représenter la séquence d'images d'entrée dans un ordre de déroulement inverse.

**9.** Dispositif fonctionnel pour recevoir des données d'images compressées conformes à une norme "Moving Pictures Expert Group" ("MPEG") et comportant des informations représentant une séquence de trames indépendantes (I), de trames de prédiction (P) et de trames bidirectionnelles (B), pour éditer l'ordre temporel des images représentées par la séquence, en réponse à un ensemble d'une ou plusieurs commandes, et pour fournir une sortie de données d'images compressées et conformes à une norme MPEG, ledit dispositif comprenant :

un support lisible par une machine ; et
des instructions enregistrées sur le support lisible par une machine, qui demandent à la machine de recevoir des données représentant les trames I, P et B,
exécutent, par rapport à une trame particulière choisie en réponse à l'ensemble d'une ou plusieurs commandes, une conversion comportant une parmi

(a) la conversion d'une trame P en une trame I en éliminant la dépendance de la trame P par rapport aux données d'une quelconque autre trame,
(b) la conversion d'une trame B en une trame B n'ayant pas de dépendance par rapport aux données des trames futures, de telle sorte que la trame B convertie ne dépende que d'une ou plusieurs trames antérieures de la séquence de données, et
(c) la conversion d'une trame B en une trame B n'ayant pas de dépendance par rapport aux données des trames antérieures, de telle sorte que la trame B convertie ne dépende que d'une ou plusieurs trames futures de la séquence de données, et

modifient l'ordre temporel relatif d'au moins une image de la séquence comportant une image représentée par la trame dépendante par rapport à une autre image en réponse aux commandes, et produisent, à partir de là, la sortie de données compressées,

dans lequel la conversion est choisie automatiquement en réponse à l'ensemble d'une ou plusieurs commandes et en réponse au fait que la trame particulière est une trame I, P ou B, pour éliminer une dépendance temporelle entre une quelconque trame représentant l'au moins une image destinée à être modifiée en ordre temporel par rapport à une autre image.

**10.** Dispositif selon la revendication 9, dans lequel la trame particulière fait partie d'un groupe d'images (GOP) et dans lequel les instructions demandent à une machine d'effectuer la conversion en :

convertissant la trame particulière dans un domaine d'images ; et
convertissant de nouveau, lorsqu'une image particulière représentée par la trame particulière a été modifiée en ordre temporel par rapport à une autre image, l'image particulière en un format parmi une trame I, une trame P et une trame B ;
de façon que la séquence d'images ait été éditée pour produire une sortie conforme MPEG sans décompresser

entièrement un GOP complet dans un domaine d'images.

**11.** Dispositif selon la revendication 9, dans lequel les instructions demandent à une machine d'effectuer la conversion dans un domaine de transformation, sans décompresser la trame particulière dans un domaine d'images.

**12.** Dispositif selon la revendication 9, dans lequel les instructions demandent à une machine d'effectuer la conversion en modifiant directement les vecteurs de mouvement et les coefficients de transformation en cosinus discret, sans effectuer de transformation en cosinus discret inverse.

**13.** Dispositif selon la revendication 9, dans lequel ledit dispositif comporte en outre la possibilité de lire une séquence d'images en arrière et dans lequel :

les instructions demandent à une machine de modifier l'ordre temporel en inversant les dépendances temporelles de chaque trame d'une pluralité de trames choisies dans le groupe de trames I, P et B.

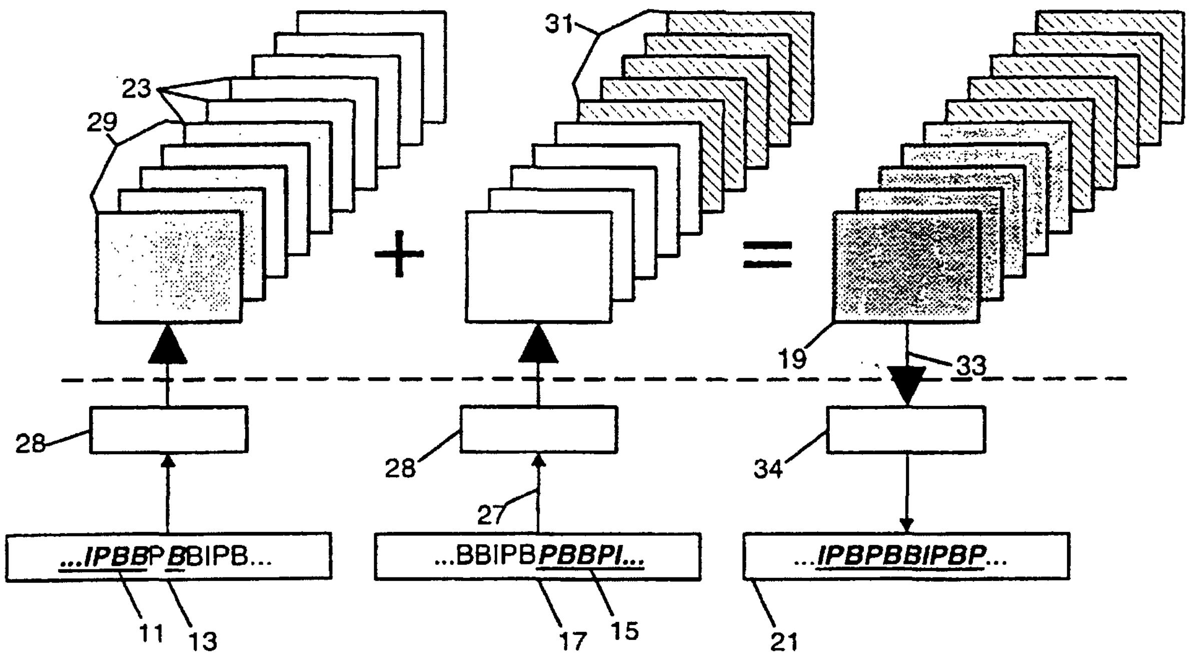


FIG. 1
(PRIOR ART)

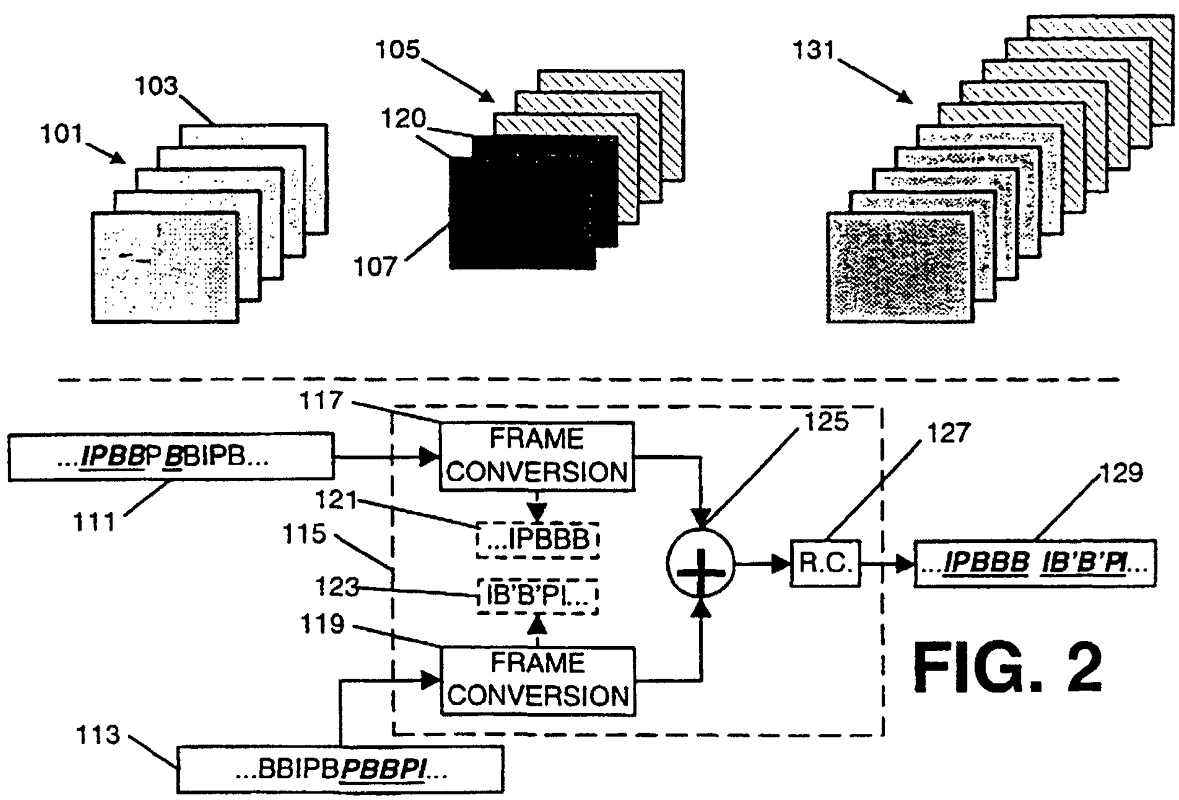


FIG. 2

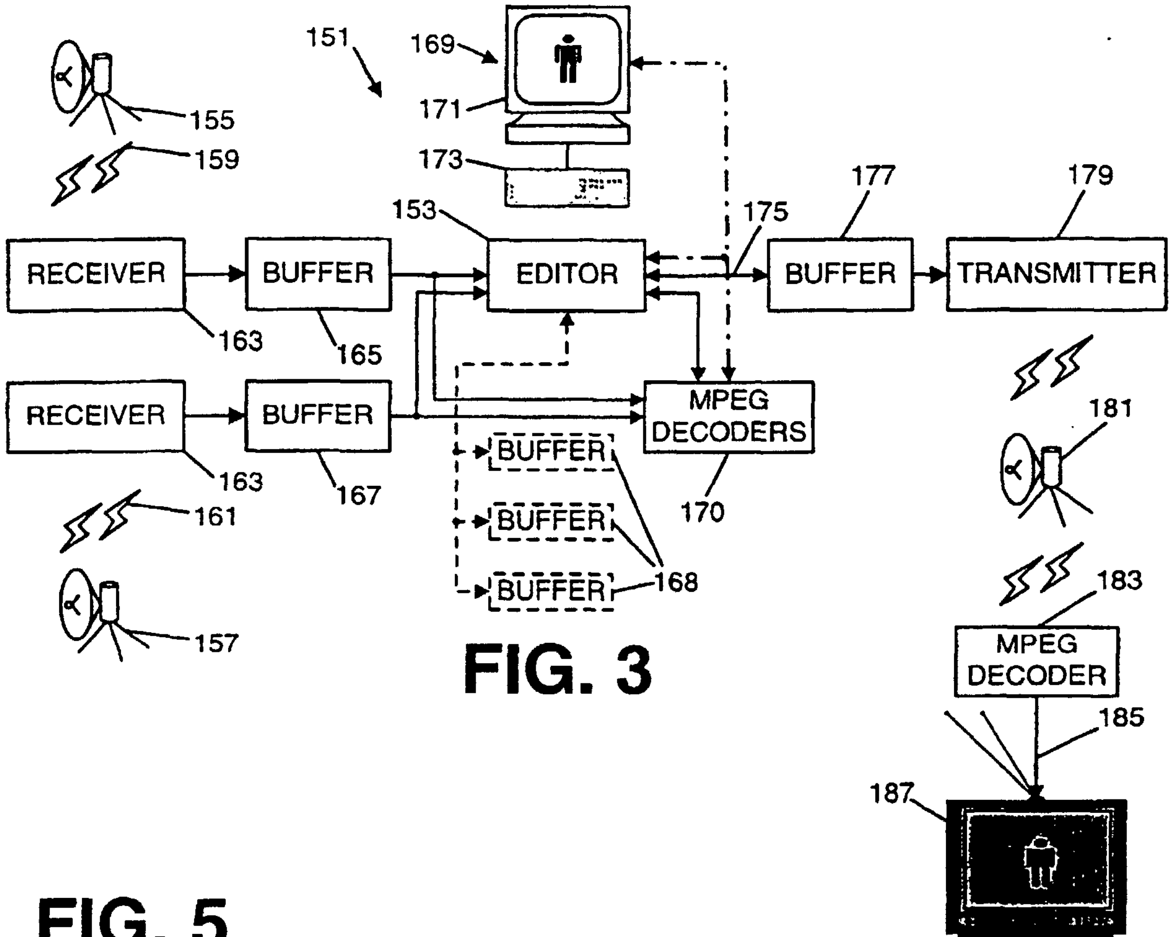
151
169
171
173
153
175
177
179
155
159
RECEIVER
BUFFER
EDITOR
BUFFER
TRANSMITTER
163
165
RECEIVER
BUFFER
MPEG
DECODERS
181
163
167
BUFFER
BUFFER
BUFFER
170
161
168
183
157
MPEG
DECODER
185
187

FIG. 3

FIG. 5

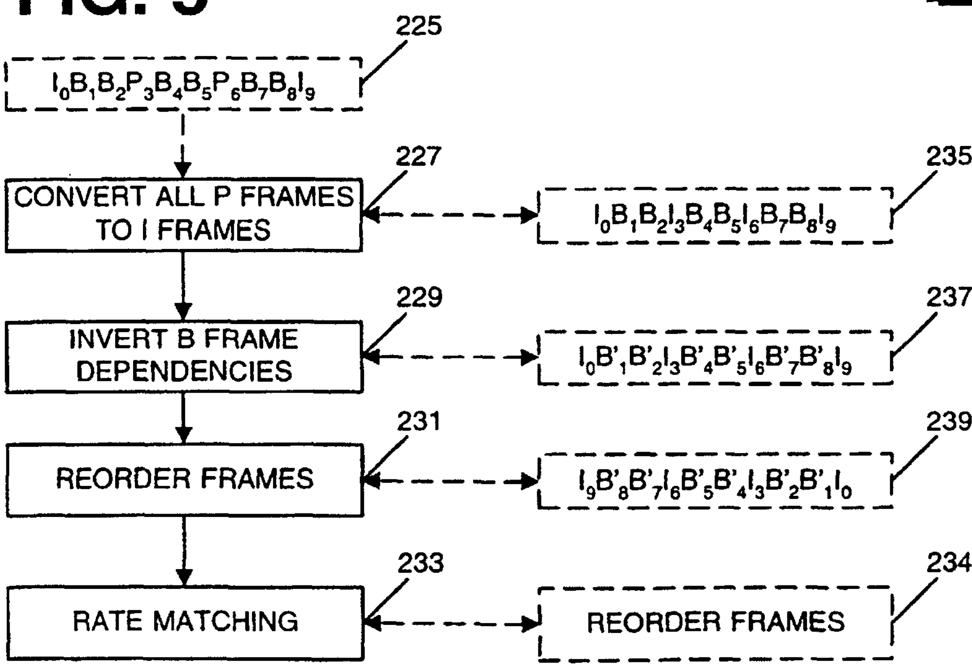
225
$I_0B_1B_2P_3B_4B_5P_6B_7B_8I_9$
227
CONVERT ALL P FRAMES TO I FRAMES
235
$I_0B_1B_2I_3B_4B_5I_6B_7B_8I_9$
229
INVERT B FRAME DEPENDENCIES
237
$I_0B'_1B'_2I_3B'_4B'_5I_6B'_7B'_8I_9$
231
REORDER FRAMES
239
$I_9B'_8B'_7I_6B'_5B'_4I_3B'_2B'_1I_0$
233
RATE MATCHING
234
REORDER FRAMES

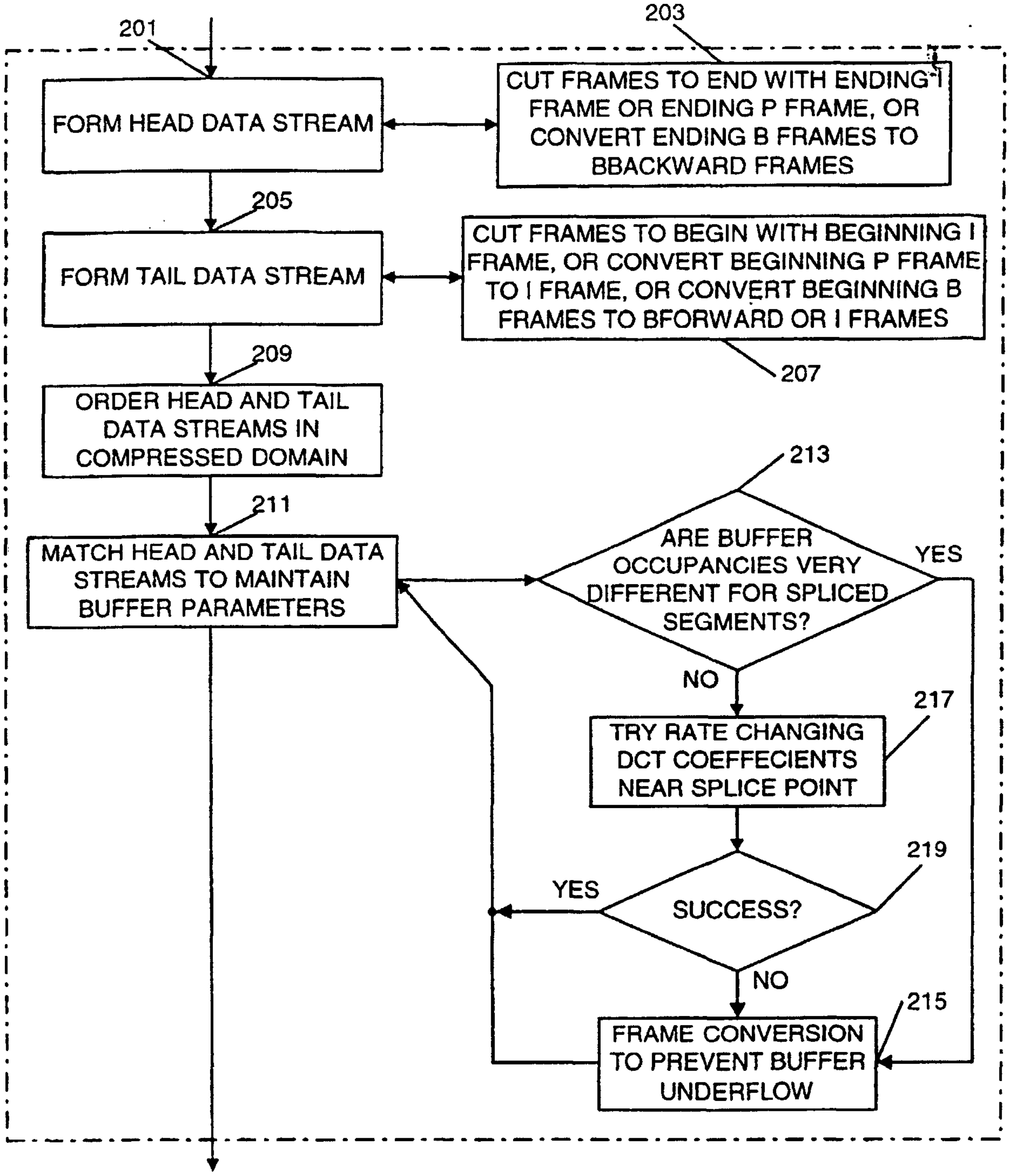
201
203
FORM HEAD DATA STREAM
CUT FRAMES TO END WITH ENDING I FRAME OR ENDING P FRAME, OR CONVERT ENDING B FRAMES TO BBACKWARD FRAMES
205
FORM TAIL DATA STREAM
CUT FRAMES TO BEGIN WITH BEGINNING I FRAME, OR CONVERT BEGINNING P FRAME TO I FRAME, OR CONVERT BEGINNING B FRAMES TO BFORWARD OR I FRAMES
207
209
ORDER HEAD AND TAIL DATA STREAMS IN COMPRESSED DOMAIN
211
MATCH HEAD AND TAIL DATA STREAMS TO MAINTAIN BUFFER PARAMETERS
213
ARE BUFFER OCCUPANCIES VERY DIFFERENT FOR SPLICED SEGMENTS?
YES
NO
217
TRY RATE CHANGING DCT COEFFECIENTS NEAR SPLICE POINT
219
YES
SUCCESS?
NO
215
FRAME CONVERSION TO PREVENT BUFFER UNDERFLOW

FIG. 4

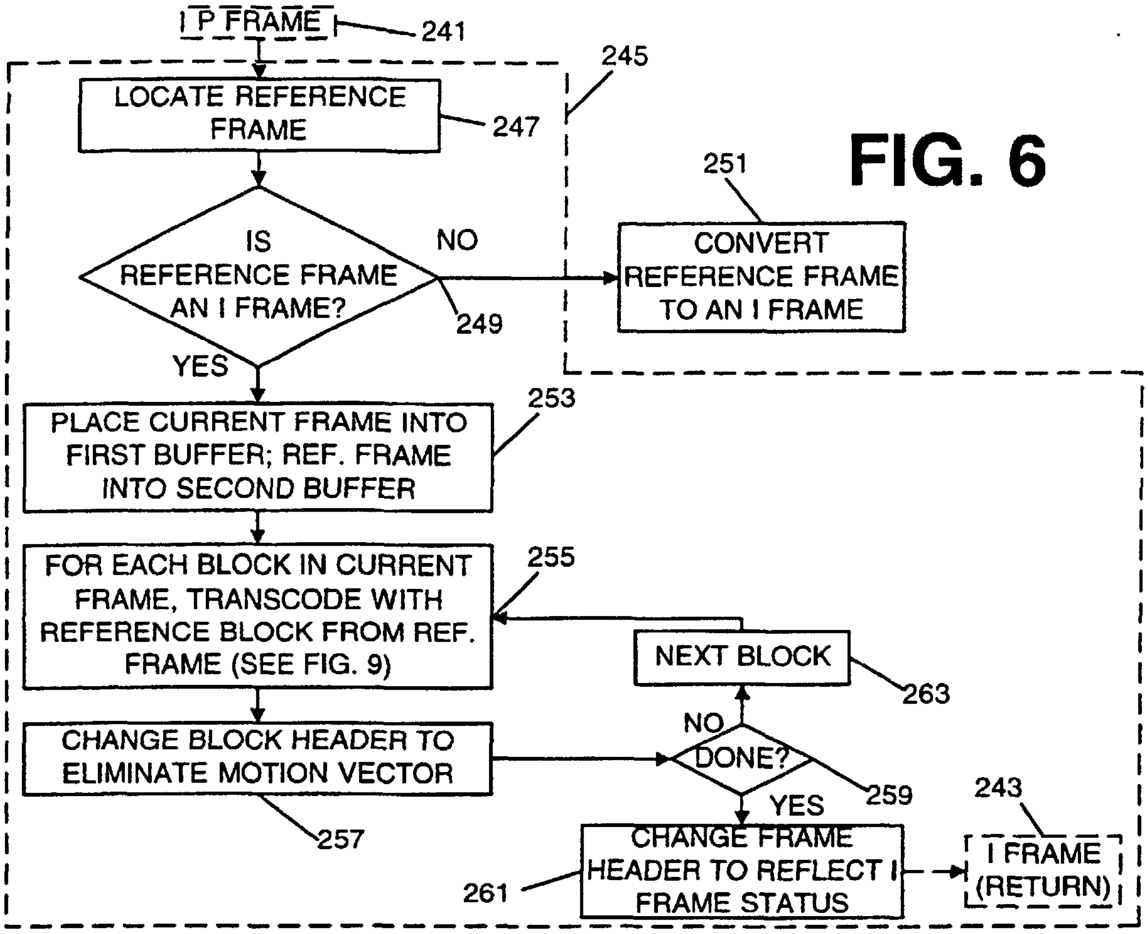
P FRAME
241
245
LOCATE REFERENCE FRAME
247
IS REFERENCE FRAME AN I FRAME?
NO
YES
249
251
CONVERT REFERENCE FRAME TO AN I FRAME
PLACE CURRENT FRAME INTO FIRST BUFFER; REF. FRAME INTO SECOND BUFFER
253
FOR EACH BLOCK IN CURRENT FRAME, TRANSCODE WITH REFERENCE BLOCK FROM REF. FRAME (SEE FIG. 9)
255
NEXT BLOCK
263
CHANGE BLOCK HEADER TO ELIMINATE MOTION VECTOR
257
NO
DONE?
YES
259
CHANGE FRAME HEADER TO REFLECT I FRAME STATUS
261
I FRAME (RETURN)
243

FIG. 6

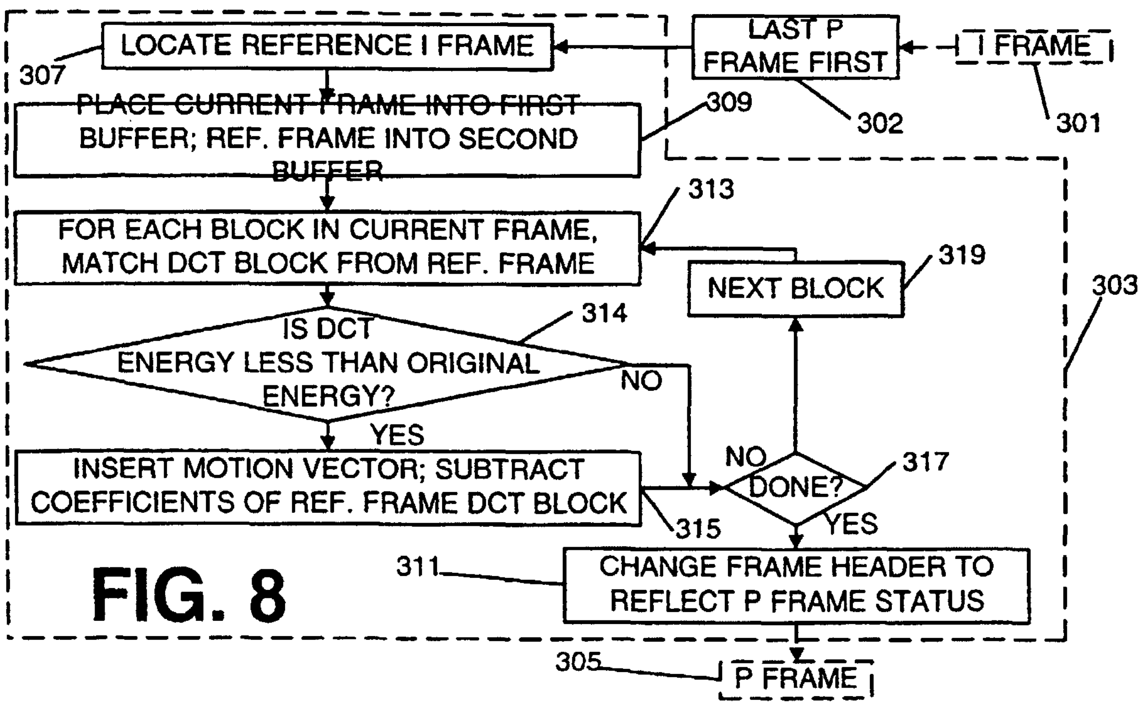
LOCATE REFERENCE I FRAME
307
LAST P FRAME FIRST
I FRAME
302
301
PLACE CURRENT FRAME INTO FIRST BUFFER; REF. FRAME INTO SECOND BUFFER
309
FOR EACH BLOCK IN CURRENT FRAME, MATCH DCT BLOCK FROM REF. FRAME
313
NEXT BLOCK
319
303
IS DCT ENERGY LESS THAN ORIGINAL ENERGY?
314
NO
YES
INSERT MOTION VECTOR; SUBTRACT COEFFICIENTS OF REF. FRAME DCT BLOCK
315
NO
DONE?
YES
317
311
CHANGE FRAME HEADER TO REFLECT P FRAME STATUS
305
P FRAME

FIG. 8

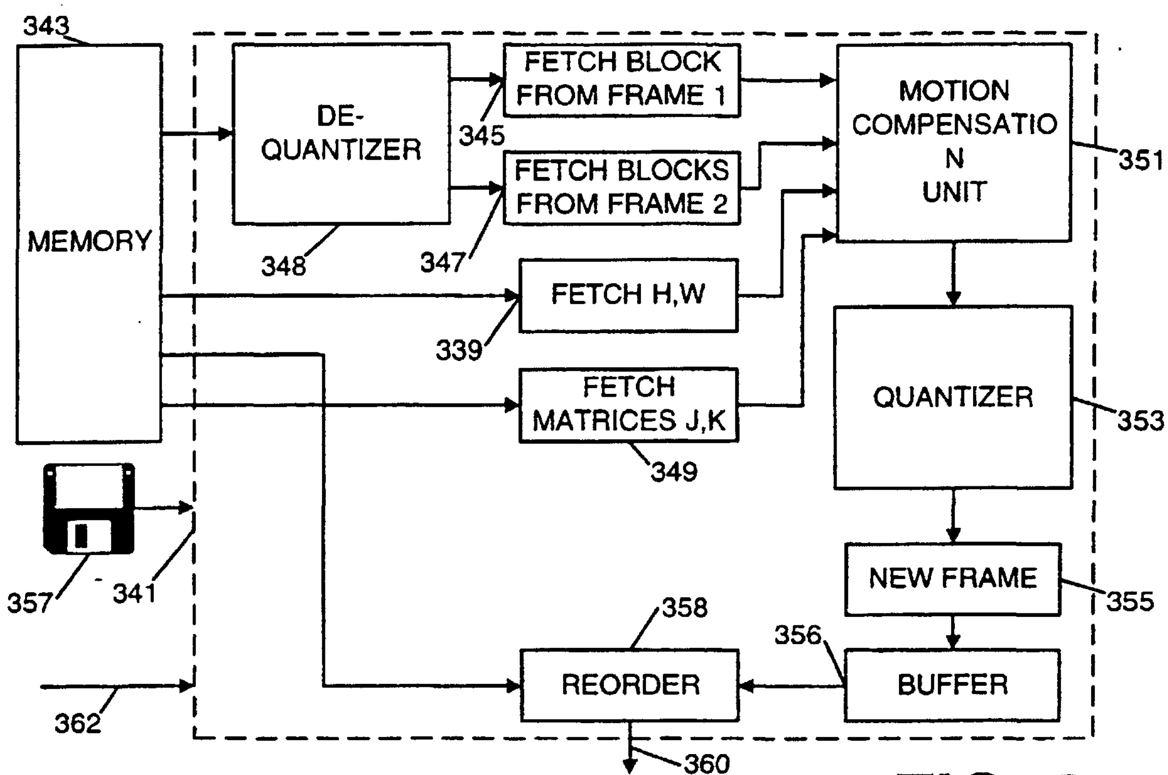
343
MEMORY
DE-
QUANTIZER
348
FETCH BLOCK
FROM FRAME 1
345
FETCH BLOCKS
FROM FRAME 2
347
FETCH H,W
339
FETCH
MATRICES J,K
349
MOTION
COMPENSATIO
N
UNIT
351
QUANTIZER
353
NEW FRAME
355
BUFFER
356
REORDER
358
360
357
341
362

FIG. 9

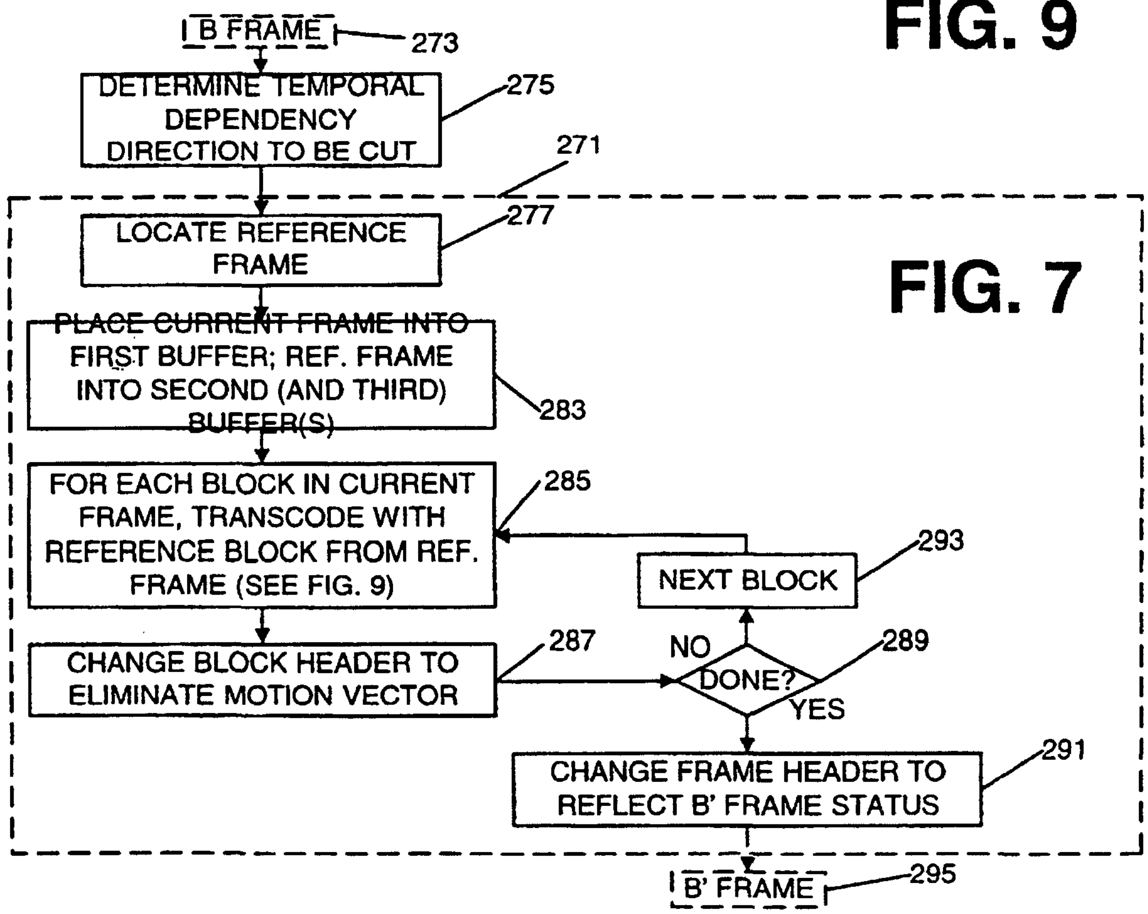
B FRAME
273
DETERMINE TEMPORAL
DEPENDENCY
DIRECTION TO BE CUT
275
271
LOCATE REFERENCE
FRAME
277
PLACE CURRENT FRAME INTO
FIRST BUFFER; REF. FRAME
INTO SECOND (AND THIRD)
BUFFER(S)
283
FOR EACH BLOCK IN CURRENT
FRAME, TRANSCODE WITH
REFERENCE BLOCK FROM REF.
FRAME (SEE FIG. 9)
285
NEXT BLOCK
293
CHANGE BLOCK HEADER TO
ELIMINATE MOTION VECTOR
287
NO
DONE?
YES
289
CHANGE FRAME HEADER TO
REFLECT B' FRAME STATUS
291
B' FRAME
295

FIG. 7

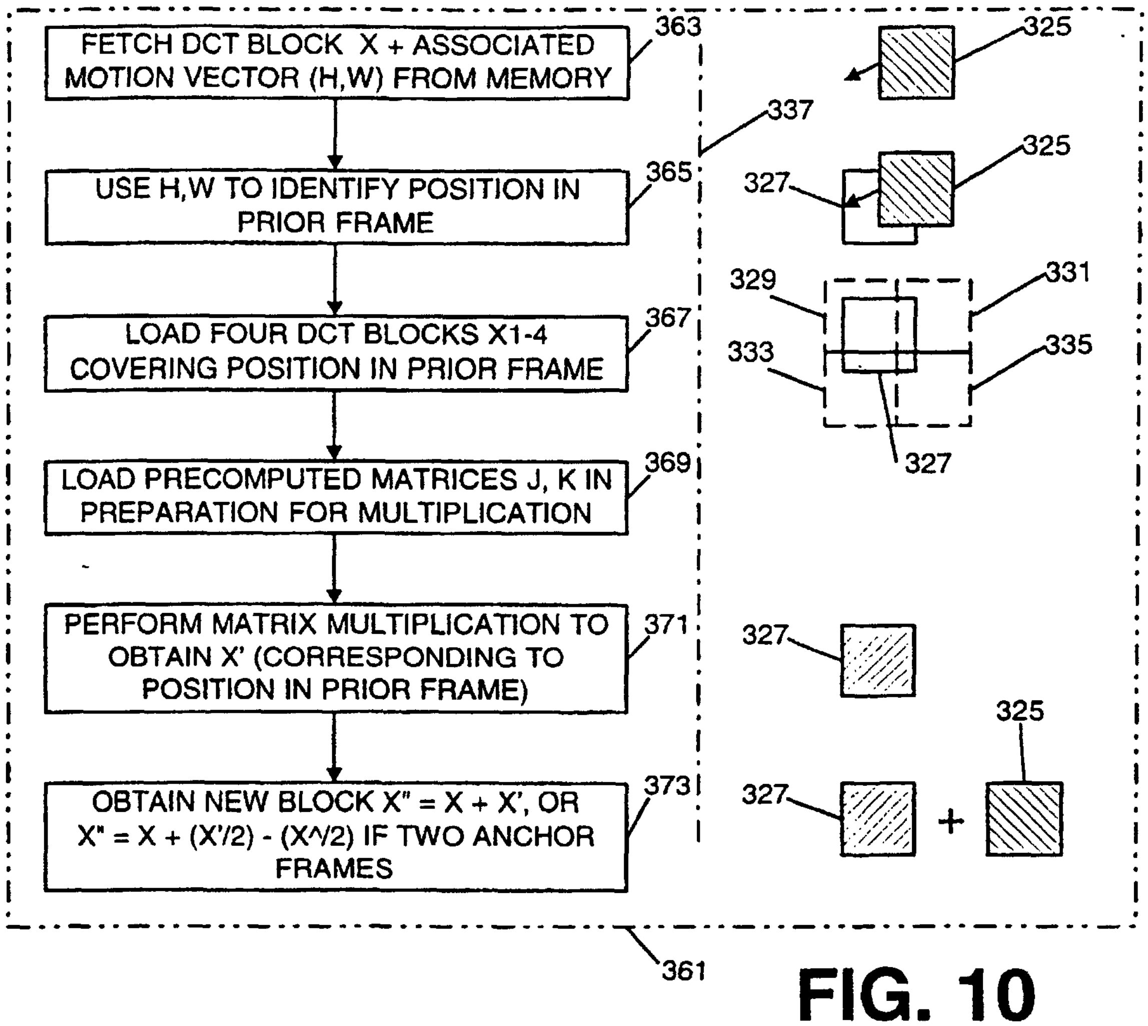
FETCH DCT BLOCK X + ASSOCIATED MOTION VECTOR (H,W) FROM MEMORY
363
USE H,W TO IDENTIFY POSITION IN PRIOR FRAME
365
LOAD FOUR DCT BLOCKS X1-4 COVERING POSITION IN PRIOR FRAME
367
LOAD PRECOMPUTED MATRICES J, K IN PREPARATION FOR MULTIPLICATION
369
PERFORM MATRIX MULTIPLICATION TO OBTAIN X' (CORRESPONDING TO POSITION IN PRIOR FRAME)
371
OBTAIN NEW BLOCK X" = X + X', OR X" = X + (X'/2) - (X^/2) IF TWO ANCHOR FRAMES
373
325
337
325
327
329
331
333
335
327
327
325
327
+
361

FIG. 10